Europäisches Patentamt

European Patent Office

Office européen des brevets

(11) Numéro de publication: **0 256 921 B1**

## (12) FASCICULE DE BREVET EUROPEEN

(45) Date de publication de fascicule du brevet:
25.09.91

(21) Numéro de dépôt: **87401768.4**

(22) Date de dépôt: **29.07.87**

(51) Int. Cl.⁵: **G06K 17/00, G06K 19/06**

(54) **Appareil de personnalisation automatique de cartes.**

(30) Priorité: **08.08.86 FR 8611547**

(43) Date de publication de la demande:
**24.02.88 Bulletin 88/08**

(45) Mention de la délivrance du brevet:
**25.09.91 Bulletin 91/39**

(84) Etats contractants désignés:
**BE CH DE ES GB IT LI NL SE**

(56) Documents cités:
**EP-A- 0 088 591**
**WO-A-86/04170**
**FR-A- 2 563 985**
**GB-A- 2 091 638**
**US-A- 4 597 495**

(73) Titulaire: **Bonnemoy, Marc**
**4, Ruelle aux Moines**
**F-95450 Vigny(FR)**

(72) Inventeur: **Bonnemoy, Marc**
**4, Ruelle aux Moines**
**F-95450 Vigny(FR)**

(74) Mandataire: **Peuscet, Jacques et al**
**Cabinet Peuscet 68, rue d'Hauteville**
**F-75010 Paris(FR)**

## Description

L'invention concerne un appareil de personnalisation automatique de cartes et en particulier de cartes à microcircuit telles que les cartes bancaires.

Les progrès de la monétique ont favorisé le développement de cartes bancaires émises par des banques, des sociétés de crédit ou autres établissements financiers analogues.

Ces cartes bancaires, destinées au paiement sans espèces, ou par exemple au retrait automatique de billets de banque, contiennent des données codées sur les pistes magnétiques présentes sur ces cartes. Il s'agit en général d'informations concernant l'émetteur de la carte et le titulaire lui-même(nom, numéro de la carte, base de détermination du code secret, ....). Certains renseignements en particulier sont inscrits en relief sur la carte (nom, numéro du porteur), afin qu'ils puissent apparaître aisément sur les souches de papier carboné après passage de la carte dans un appareil à souches approprié. On parle alors de cartes "embossées", ou mieux "estampées".

Plus récemment, on a pu observer l'introduction de microcircuits ("puces") sur ces cartes à piste magnétique. Ces dernières se présentent donc sous la forme de cartes mixtes, présentant à la fois une mémoire électronique et au moins une piste magnétique (piste ISO2).

Ces deux supports, microprocesseur et piste magnétique, doivent donc recevoir les mêmes informations, l'introduction du support électronique s'expliquant pour des raisons de sécurité d'emploi (inviolabilité).

Néanmoins, si la personnalisation de la carte par sa piste magnétique est très rapide (inférieur à 1 seconde), celle relative au microcircuit prend au moins plusieurs dizaines de secondes (30 à 40 secondes).

On connaît deux types de fabrication de telles cartes mixtes. Dans le premier cas, les cartes embossées et magnétiquement codées sont introduites dans des lecteurs magnétiques encodeurs qui, à partir des informations fournies par la piste magnétique, encodent les microcircuits avec ces mêmes informations. La société SYSCAM a commercialisé de tels appareils sous le nom de SYSCAM 90. Cet appareil de personnalisation de cartes bancaires à mémoire utilise des lecteurs encodeurs du commerce et un micro-ordinateur, du type compatible IBM-PC qui peut gérer les opérations de personnalisation de plusieurs lecteurs. La lecture de la piste magnétique ISO2 de la carte bancaire provoque la recherche des informations correspondantes au porteur sur les disques du micro-ordinateur SYSCAM. Ces dernières sont alors encodées sur le microcircuit par l'intermédiaire de l'encodeur à puce.

Cet appareil effectue assez lentement l'opération de personnalisation (de l'ordre de 30 à 40 secondes), ce qui est d'ailleurs cohérent avec l'introduction manuelle des cartes dans les lecteurs encodeurs. Mais il est maintenant souhaitable d'accélérer la cadence de fabrication de ces cartes, à des coûts de production raisonnables.

Il serait envisageable d'associer à chacun de ces lecteurs encodeurs un automate de manipulation qui alimenterait ceux-ci de cartes à personnaliser à la fin de chaque opération de personnalisation. Cette disposition ne serait cependant pas économiquement satisfaisante et ne résoudrait de toute façon pas les problèmes de lenteur liés à l'opération de personnalisation.

Un deuxième type de fabrication, existant en particulier aux Etats-Unis, consiste à utiliser des appareils de personnalisation qui réalisent toutes les opérations de personnalisaton à la fois, embossage, codage de la piste magnétique, codage du microcircuit. Ces appareils sont cependant très lents.

D'après GB-A-2 091 638, on connaît un appareil de personnalisation de cartes, du type comprenant : un dispositif de traitement desdites cartes, qui comporte plusieurs unités de personnalisation associées à une unité de commande propre à gérer les opérations de personnalisation et un automate de manipulation qui comporte au moins :

- un magasin d'alimentation propre à loger les cartes à personnaliser,
- un magasin de réception propre à loger les cartes correctement personnalisées,
- un magasin de rebut propre à loger les cartes incorrectement personnalisées ou défectueuses,
- des moyens de préhension des cartes propres à :
  - extraire une carte du magasin d'alimentation,
  - transférer la carte au niveau d'une unité de personnalisation,
  - l'introduire dans ladite unité,
  - la reprendre de ladite unité,
  - la transférer au niveau du magasin de réception ou du magasin de rebut si elle est défectueuse,
  - la décharger dans le magasin de réception ou dans le magasin de rebut si elle est défectueuse,
  une logique de commande étant prévue et reliée à l'unité de commande pour gérer les opérations de personnalisation.

Un tel appareil reste relativement lent pour exécuter la personnalisation d'un grand nombre de cartes.

La présente invention cherche à pallier les problèmes résultant de la lenteur de l'opération de personnalisation de cartes mixtes en optimisant la répartition temporelle des tâches nécessaires à la personnalisation. Elle permet d'améliorer ainsi considérablement la cadence de fabrication de ces cartes et donc d'en alléger les coûts de production.

Un autre but de l'invention est de fournir un appareil de personnalisation de cartes mixtes à un prix accessible et d'installation facile.

L'appareil de personnalisation proposé, du type défini précédemment, est caractérisé par le fait que :

- chaque unité de personnalisation est du même type,
- l'automate de manipulation comprend un dispositif de déplacement bi-directionnel propre à se déplacer le long d'un axe de manière à pouvoir s'arrêter devant l'une des unités de personnalisation et des moyens de préhension des cartes montés sur le dispositif de déplacement de manière à pouvoir se déplacer le long d'un second axe, perpendiculaire au premier axe,
- le temps requis pour une opération de personnalisation est supérieur à celui nécessaire pour gérer l'unité de personnalisation avec l'automate et la logique de commande est apte à actionner lesdits moyens de préhension et le dispositif de déplacement de manière à intercaler, pendant une opération de personnalisation dans une unité de personnalisation, une ou plusieurs opérations d'extraction, de transfert ou de chargement d'une carte relative à une ou plusieurs autres unités de personnalisation disponibles,

    les opérations de personnalisation étant effectuées ainsi simultanément sur plusieurs cartes en prenant en considération une autre unité si l'opération de personnalisation pour une unité n'est pas terminée.

Avantageusement, l'automate comprend en outre :
- un dispositif séparateur de cartes associé au magasin d'alimentation propre à extraire en partie une carte dudit magasin,
- des dispositifs de rangement des cartes, respectivement associés au magasin de réception et au magasin de rebut, propres à ranger une carte dans l'un desdits magasins.

L'invention est particulièrement destinée à des cartes comprenant une ou plusieurs pistes magnétiques codées et un micro-circuit non codé, l'opération de personnalisation consistant au codage du microcircuit à l'aide des données présentes sur la carte et/ou des informations emmagasinées dans l'unité de commande.

Les unités de personnalisation sont alors des lecteurs-encodeurs mixtes de cartes à piste magnétique et à microcircuit comprenant un connecteur de carte à mémoire.

Une variante consiste à personnaliser le microcircuit à partir d'informations estampées (ou "embossées") sur une carte, qui peut être dépourvue de piste magnétique.

Il est encore envisageable que les unités de personnalisation soient elles-mêmes ou comprennent des dispositifs d'embossage ou des dispositifs de marquage ou encore des encodeurs magnétiques.

Selon un premier réalisation de l'invention, les magasins d'alimentation et de réception se présentent sous la forme de cassettes interchangeables et amovibles.

Avantageusement, au moins un capteur est associé au magasin d'alimentation afin de détecter si celui-ci est vide, tandis qu'il est associé au moins un interrupteur d'état au magasin de rebut afin de détecter si celui-ci est plein.

Selon un autre réalisation de l'invention, les dispositifs de séparation ou de rangement des cartes comprennent au moins un moteur préférablement réducteur et une courroie de caoutchouc préférablement revêtue d'une couche siliconée.

Avantageusement encore, le dispositif de séparation comprend au moins un capteur afin de détecter si une carte est sortie du magasin d'alimentation, la commande du moteur du dispositif de séparation étant maintenue tant que ladite carte n'est pas détectée par ledit capteur.

Ledit capteur transmet alors à la logique de commande un signal de défaut de séparation si la carte à extraire n'est pas détectée par le capteur au bout du temps normalement prévu pour l'opération d'extraction, ce signal pouvant être également interprété par la logique de commande comme un signal de magasin d'alimentation vide si la logique de commande reçoit simultanément un signal du capteur associé au magasin d'alimentation.

De manière semblable, chaque dispositif de rangement comprend au moins un capteur afin de détecter si une carte est présente à l'entrée du magasin de réception (respectivement de rebut), la commande du moteur de chaque dispositif de rangement étant maintenue tant que ladite carte est détectée par ledit capteur.

Comme on le verra plus loin, les moyens de préhension des cartes comprennent une pince commandée préférablement par un moteur réducteur associé à un excentrique.

Plus particulièrement, il est associé à ladite pince au moins deux interrupteurs d'état commandant respectivement les positions ouverte et fermée de la pince.

Celle-ci présente l'avantage d'avoir deux degrés de liberté pour absorber les erreurs de positionnement au niveau des lecteurs et qui sont rendus possibles par l'action d'un ressort et de rondelles flexibles disposés dans le mécanisme de la pince.

Selon un autre réalisation de l'invention, le dispositif comprend :

- un moteur préférablement à courant continu, permettant le déplacement des moyens de préhension le long d'un premier axe correspondant aux positions d'arrêt desdits moyens devant un magasin ou une unité de personnalisation,
- un moteur préférablement réducteur, permettant le déplacement des moyens de préhension le long d'un second axe correspondant au transfert d'une carte entre les moyens de préhension et une unité de personnalisation ou un magasin.

Plus précisément, le dispositif de déplacement est muni d'au moins une cellule permettant la localisation d'une unité de personnalisation ou du magasin sélectionné le long du premier axe de déplacement.

Il est préférable qu'il soit associé à ladite cellule au moins deux autres cellules, situées de part et d'autre de ladite cellule, permettant le ralentissement du dispositif de déplacement à l'approche de l'unité de personnalisation ou du magasin sélectionné.

Plus particulièrement, un dispositif de déplacement comprend au moins deux interrupteurs de sécurité détectant une surcourse le long du premier axe, respectivement prévus à la position initiale et à la position finale dudit dispositif sur cet axe.

De manière similaire, le dispositif de déplacement est muni d'au moins deux interrupteurs de sécurité détectant une fin de course le long du second axe, respectivement prévus à la position de retrait et à la position avancée de la pince le long de cet axe.

Enfin, il est très avantageux qu'il soit associé au dispositif de déplacement au moins un capteur pour détecter la position de retrait des moyens de préhension le long du second axe, tandis que les moyens de préhension sont munis d'un autre capteur qui, occulté par un drapeau disposé à l'entrée de chaque unité de personnalisation, indique la position d'avancement des moyens de préhension devant lesdites unités de personnalisation.

Parallèlement, il est associé au dispositif de déplacement au moins un interrupteur, placé à l'entrée de chaque magasin, permettant de positionner la pince devant le magasin correspondant.

Dans un mode de réalisation préférentiel de l'invention, les unités de personnalisation comprennent chacune un assemblage de guidage propre à permettre l'introduction correcte d'une carte dans ladite unité et de compenser les écarts de positionnement.

Chaque unité de personnalisation comprend avantageusement un contact indiquant l'introduction et le positionnement correct d'une carte dans ladite unité et transmettant un signal à l'unité de commande des unités de personnalisation initialisant l'opération de personnalisation.

L'unité de commande des unités de personnalisation est programmée de manière préférentielle afin qu'elle envoie une série de signaux à la logique de commande indiquant :

- l'état de disponibilité des unités de personnalisation,
- l'état d'achèvement de l'opération de personnalisation en cours dans les unités de personnalisation en fonctionnement,
- l'état de fin d'opération de personnalisation de la carte en traitement dans l'unité de personnalisation,
- le résultat de l'opération de personnalisation pour ladite carte.

D'autres caractéristiques et avantages de l'invention apparaîtront à l'examen de la description détaillée ci-après et des dessins annexés, sur lesquels :

- la figure 1 est un schéma de principe de l'appareil de personnalisation vu en perspective cavalière, selon l'invention ;
- la figure 2 est un schéma de principe du même appareil, vu de dessus ;
- la figure 3 est un schéma fonctionnel du même appareil, illustrant les relations existant entre les différentes parties de l'appareil et la logique de commande ;
- la figure 4 est un schéma détaillé du magasin d'alimentation et du dispositif de séparation qui lui est associé ;
- la figure 5a est un schéma détaillé de la pince ;
- la figure 5b est un schéma détaillé du dispositif de déplacement et de la pince montée sur ce dispositif ;
- la figure 6 est un schéma de la pince en position avancée devant le magasin d'alimentation ;
- la figure 7 est un schéma des magasins de réception et de rebut, ainsi que de la pince en position avancée devant le magasin de réception ;
- la figure 8 est un schéma détaillé des lecteurs encodeurs et de la pince en position avancée devant l'un de ces lecteurs-encodeurs ;
- la figure 9 est un schéma de principe illustrant les différentes connexions électroniques entre les capteurs, les moteurs et les interrupteurs avec la logique de commande ;
- la figure 10 est un tableau des signaux transmis ou reçus par chaque poste de l'appareil de personnalisation ;
- la figure 11 est un diagramme des opérations de personnalisation d'une carte ;
- la figure 12 est un diagramme de gestion des opérations de personnalisation pour tous les lecteurs-encodeurs.

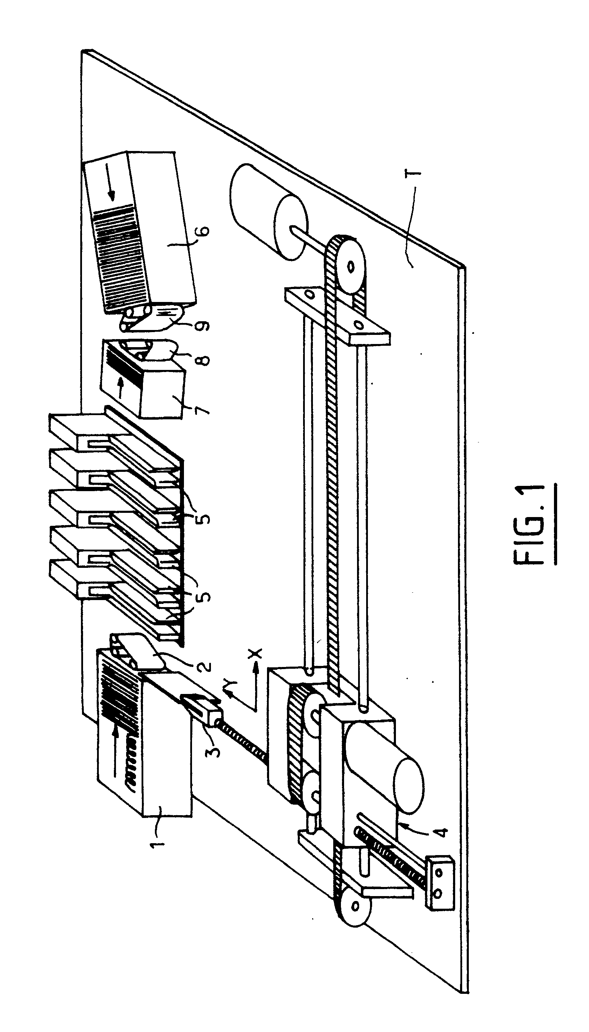

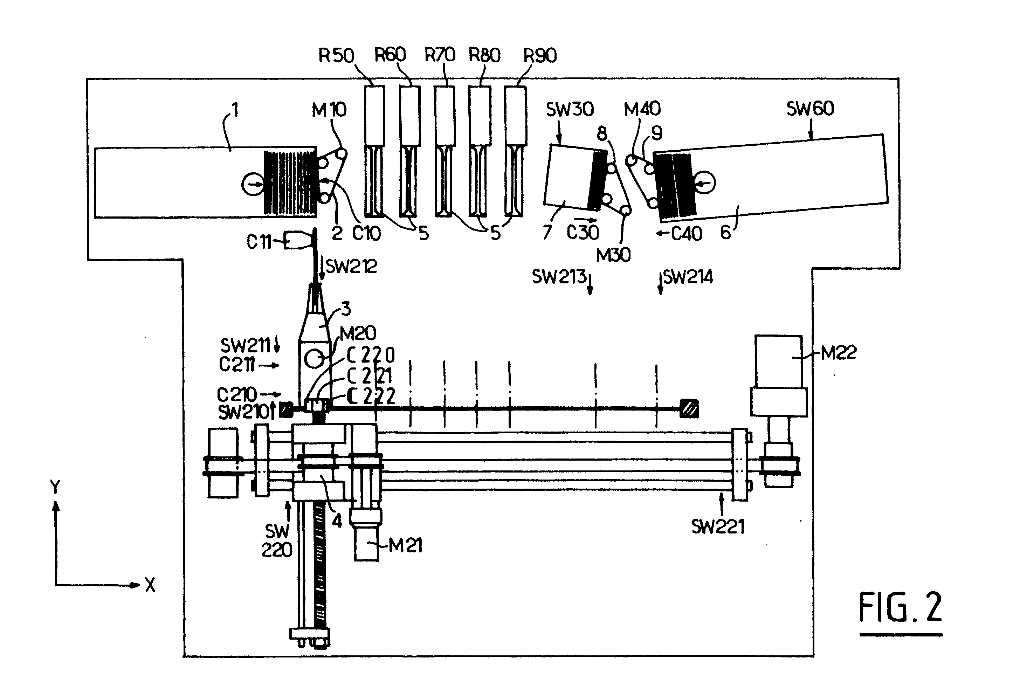

Sur les figures 1 et 2, on a représenté l'appareil de personnalisation dans son ensemble. Celui-ci est constitué d'une table propre à supporter les différents sous-ensembles de l'appareil. L'appareil comprend schématiquement un magasin d'alimentation 1, contenant les cartes à personnaliser, un dispositif de séparation des cartes 2 (appelé encore "dépileur"), des moyens de préhension 3, qui peuvent être par exemple une pince, un dispositif de déplacement bidirectionnel 4, un ensemble de cinq lecteurs-encodeurs 5, un magasin de rebut pour loger les cartes défectueuses 7, lui-même muni d'un dispositif de rangement des cartes 8 (encore appelé "empileur"), et un magasin de réception 6 pour loger les cartes personnalisées, également muni d'un dispositif de rangement des cartes 9.

Dans le mode de réalisation préférentiel, les magasins et les lecteurs-encodeurs sont situés sensiblement sur un même axe tandis que le dispositif de déplacement est disposé sur un axe X parallèle à l'axe des magasins et des lecteurs-encodeures. La pince, perpendiculaire au dispositif de déplacement, se déplace donc le long d'un axe Y, perpendiculaire à l'axe X, et fait face aux magasins et aux lecteurs-encodeurs.

La table T peut être recouverte d'un capot de protection, non représenté. Les dimensions hors-tout sont typiquement les suivantes : 1100 x 800 x 300 mm. L'ensemble de l'automate est fixé sur une platine ayant un bonne rigidité.

Sur la figure 2, on a également indiqué les capteurs optiques, représentés par la lettre C, les interrupteurs représentés par les lettres SW, propres à transmettre des signaux à une logique de commande qui gère toutes les opérations de l'automate. On remarque également des contacts R qui, eux, transmettent des signaux à l'unité de commande des lecteurs-encodeurs. Les fonctions de ces capteurs, de ces interrupteurs et de ces contacts seront détaillées dans la description des figures relatives à chaque ensemble de l'appareil.

Dans son fonctionnement le plus général, une carte à personnaliser, contenue dans le magasin d'alimentation 1 est "dépilée" à l'aide du dispositif de séparation 2, actionné par un moteur M10.

La pince 3, commandée par le moteur M20, saisit alors la carte et la tranfère en effectuant un déplacement bidirectionnel vers les lecteurs-encodeurs 5, où elle la dépose. Cette pince 3 est mue selon les deux axes horizontaux perpendiculaires entre eux, X et Y, par le dispositif de déplacement 4. Le dispositif de déplacement est actionné par deux moteurs M21, M22. A la fin de l'opération de personnalisation, la pince 3 reprend la carte personnalisée (ou éventuellement défectueuse) et la décharge dans l'un des magasins de sortie approprié, le magasin de réception 6 ou le magasin de rebut 7 pour cartes défectueuses. Des dispositifs "empileurs" 8 et 9 (actionnés respectivement par les moteurs M30 et M40) assurent l'introduction de la carte.

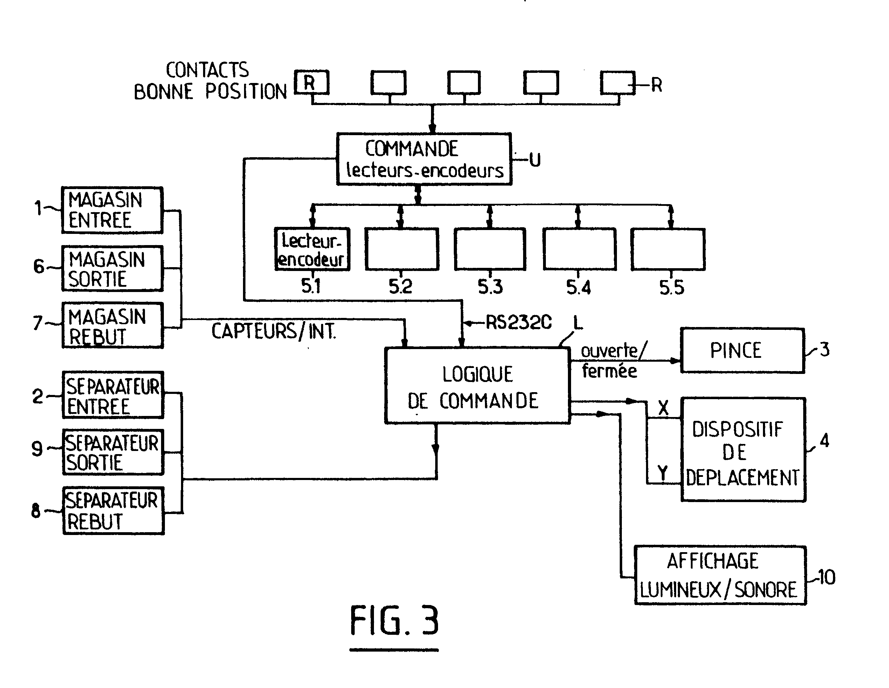

La figure 3 illustre plus particulièrement comment les différents ensembles de l'appareil de personnalisation selon l'invention sont électriquement reliés entre eux. Une logique de commande L centralise la gestion des diverses opérations de l'automate. Elle reçoit tout d'abord en entrée les informations provenant des magasins 1, 6, 7 (état du magasin) ainsi que des dispositifs séparateurs associés à chaque magasin 2, 9, 8. Ces informations sont données par des capteurs ou des interrupteurs indiqués sur la figure 2 respectivement par les lettres C et SW.

Des coupleurs photo-électroniques sont prévus sur les lignes d'entrée afin d'en assurer l'isolement galvanique.

L'unité de commande reçoit également les données provenant de l'unité de commande des lecteurs-encodeurs U. Celle-ci gère les opérations de personnalisation propres aux lecteurs encodeurs 5-1, ... 5-5. Des contacts R font l'interface mécanique entre l'automate et cette unité de commande U.

La logique de commande L est dans le mode de réalisation préférentiel de l'invention un microprocesseur de la famille INTEL du type 8088. Il ne gère que les opérations relatives à l'animation de l'automate. Quant à l'unité de commande des lecteurs, c'est typiquement un microordinateur IBM-PC (ou tout compatible avec ce dernier).

La communication entre la logique de commande L et l'unité de commande des lecteurs U se fait, comme représenté sur la figure, par une liaison RS232C. D'autre part, deux types d'informations logiques issues des lecteurs sont communiqués à la logique de commande (carte présente, opération de personnalisation terminée). Les détails de ces informations seront explicités plus loin.

La liaison RS 232C peut également servir pour un éventuel téléchargement du logiciel de l'automate.

La logique de commande L est prévue, soit avec de la mémoire morte, programmable et effaçable REPROM dans le cas où le programme de gestion de l'automate est figé, soit avec une mémoire vive RAM dans le cas d'un téléchargement. Il s'est avéré qu'une capacité de 8 kilooctets était suffisante.

La logique de commande L comporte d'autre part des lignes de sortie pour transmettre des signaux d'interruption ou de commande aux moteurs actionneurs M, et éventuellement un dispositif d'affichage lumineux ou sonore pour messages d'alarmes. C'est en particulier le cas du moteur M20 (ouverture et fermeture de la pince 3), des moteurs 21 et M22 (dispositif de déplacement 4 selon les axes X ou Y).Des relais (cas des commandes pour les moteurs M21 à M22) ou des transistors de puissance (autres cas) servent d'interfaces sur ces lignes de sortie.

Les cartes entrée et sortie peuvent être modulaires et séparées.

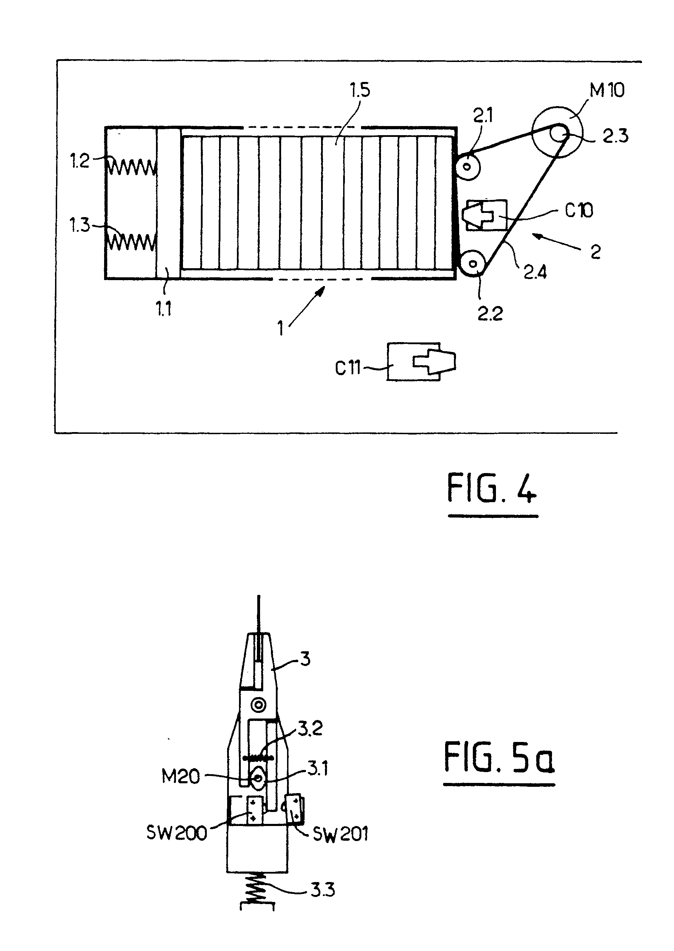

Il est maintenant fait référence à la figure 4 qui décrit de manière détaillée le magasin d'alimentation 1 des figures 1 et 2, ainsi que le dispositif de séparation 2 ("dépileur").

Le magasin d'alimentation se présente sous la forme d'une cassette amovible pouvant contenir par exemple jusqu'à 200 cartes. Les cartes, préalablement embossées, ont des dimensions standard : 86 x 54 mm (norme ISO 3554). Ce sont, dans le mode de réalisation préférentiel de l'invention, des cartes mixtes comprenant à la fois une piste magnétique, du type IS02, et un microcircuit. Empilées, les unes contre les autres, elles sont toutes orientées de la même façon, le microcircuit étant du côté externe par rapport au dispositif de déplacement.

Embossées, elles présentent une épaisseur maximale de 1,3mm. La cassett, où peuvent se loger verticalement 200 cartes environ, a donc des dimensions typiques : 90 x 90 x 300 mm.

Un plateau 1.1 muni de ressorts 1.2 et 1.3 exerce une pression sur la pile des cartes 1.5 et les maintient verticales. Cette disposition verticale a été jugée préférable à une disposition horizontale ; dans cette dernière en effet, les cartes embossées, mises à plat, glisseraient vers le côté de plus faible épaisseur. La pression uniforme exercée par le plateau 1.1 sur les cartes verticales pallie cet inconvénient.

Une cellule C10, de type capteur à réflexion, permet d'indiquer si le magasin est vide. Typiquement, on utilise une cellule, modèle OPB 703A.

Sur cette même figure 4, on a représenté le dispositif de séparation 2 des figures 1 et 2. Il comporte deux poulies 2.1 et 2.2 et un moteur réducteur M10 muni d'un arbre de rotation. Une courroie de caoutchouc 2.4 revêtue d'une couche siliconée est tendue sur les deux poulies 2.1 et 2.2 et un galet 2.3 monté sur l'arbre de rotation. Le dispositif de séparation ou "dépileur" 2 est placé en bout du magasin d'alimentation 1, face à ce dernier. Les poulies 2.1 et 2.2 sont positionnées de telle sorte que la courroie 2.4 est placée contre la carte à extraire du magasin 1.

Une cellule C11 du même type que C10 est située dans le prolongement de la largeur du magasin, dans la direction d'extraction de la carte. Cette cellule C11 commande le moteur réducteur M10. Tant que la carte à extraire ne masque pas cette cellule C10, la commande d'actionnement du moteur M10 est maintenue. La cellule C10 est placée de telle sorte que la carte sorte d'environ 50 mm du magasin 1.

Lorsque la cellule C10 détecte la carte extraite, la commande d'actionnement du moteur M10 est arrêtée. Celle-ci est déclenchée de nouveau lorsque la pince 3 saisit la carte extraite. La roue libre montée sur l'axe moteur de M10 permet en effet une prise aisée de la carte par la pince. Le moteur M10 est alors de nouveau mis en marche, ce qui entraîne la rotation de la courroie 2.4 et l'extraction d'une nouvelle carte.

L'opération d'extraction dure environ 2.5 secondes. La logique de commande L qui gère toutes les opérations de l'automate est programmée de telle sorte que si au bout d'un temps déterminé, par exemple 3 secondes, la cellule C11 n'a pas envoyé de signal indiquant la détection d'une carte, une alarme lumineuse (ou sonore) soit mise en marche. La logique de commande L examine alors si elle a déjà enregistré un signal provenant de la cellule C10 détectant un magasin d'alimentation vide. Deux signaux d'alarme sont donc à envisager : le premier (lumineux ou sonore, ou éventuellement affichage sur un terminal vidéo) indique une anomalie du dispositif de séparation 2 ; le second, différent du premier (par exemple lumineux et sonore, ou éventuellement affichage sur un terminal vidéo), signale un magasin d'alimentation vide. L'absence de cartes entraîne évidemment que la cellule C11 ne peut détecter aucune carte, sans que le dépileur lui-même présente un défaut de fonctionnement.

La figure 5a représente les moyens de préhension 3. Ces derniers se présentent dans un mode de réalisation de l'invention sous la forme d'une pince 3, à extrémités plates et mobiles et pouvant saisir adéquatement une carte embossée.

De façon à ne pas endommager le microcircuit, les cartes sont empilées dans le magasin d'alimentation de façon à ce que le microcircuit, en général situé dans un coin supérieur de la carte, soit situé du côté extérieur à l'ensemble dispositif de déplacement-pince. Par contre, la pince 3 saisit la carte de manière à ce que la carte soit fermement maintenue. Il convient cependant de procéder aux ajustements nécessaires pour que la pince puisse loger convenablement la carte dans les unités de personnalisation. Un espace suffisant doit être prévu pour que la pince puisse se déplacer au dessus des lecteurs-encodeurs.

La pince 3 est commandée par un motoréducteur M20. Préférablement, un moteur est associé à un excentrique, ce qui permet une plus grande précision dans le mouvement. Ce moteur transmet, par l'intermédiaire d'une came 3.1, des mouvements aux extrémités plates de la pince et n'utilise qu'un sens de rotation. Les bras de la pince sont sollicités sur l'exentrique par un ressort 3.2. Des microinterrupteurs SW200 et SW201 disposés à l'intérieur de la pince actionnent l'ouverture et la fermeture de la pince et permettent d'envoyer à tout moment les signaux pince ouverte, pince fermée à la logique de commande. Ces interrupteurs sont miniaturisés et se présentent sous la forme de microcontacts. Typiquement, ce sont des microinterrupteurs QS, de type AH 3206. Le moteur M20 est directement commandé par la logique de commande L.

La pince 3 présente deux degrés de liberté. Le premier, selon l'axe Y, correspond à l'avancement (respectivement au retrait) de la pince vers un magasin ou un lecteur (respectivement d'un magasin ou d'un lecteur). Il est permis grâce à un ressort 3.3 disposé sur l'axe sur lequel est montée la pince. L'autre, selon l'axe X, permet à la pince d'absorber les erreurs de positionnement au niveau des lecteurs. Il est rendu possible par l'action de deux rondelles flexibles non représentées.

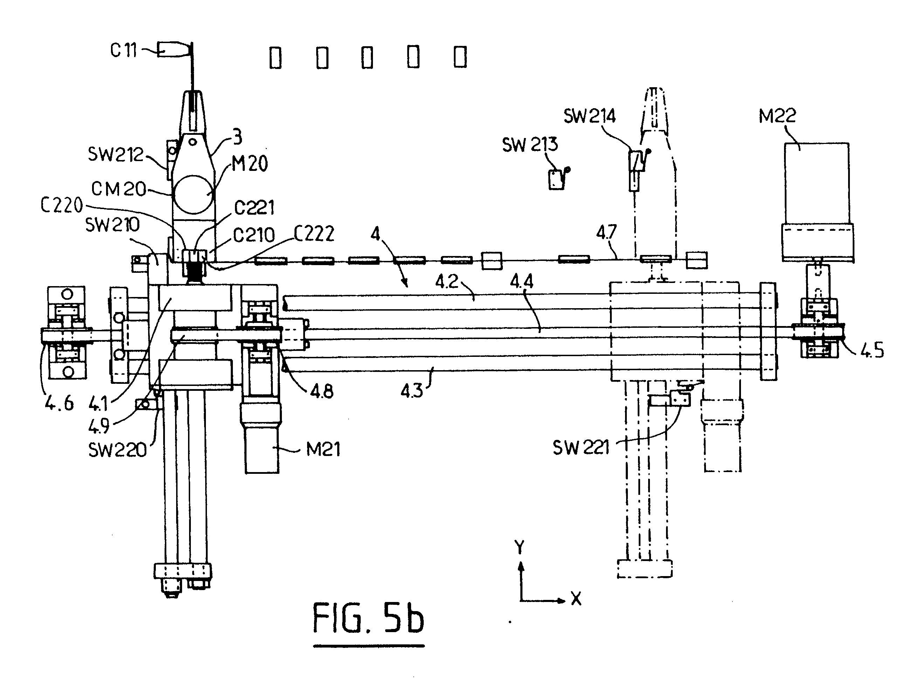

La figure 5b illustre le dispositif de déplacement ainsi que la pince précédemment décrite.

Celle-ci, portant la référence 3, est montée par l'intermédiaire d'une vis sans fin à un chariot 4.1, lui même fixé à un dispositif de déplacement 4. Deux axes de déplacement dans le plan horizontal de la table T, perpendiculaires entre eux (axes X et Y), sont possibles.

Le premier (l'axe X), correspond aux positions d'arrêt du chariot devant l'un des postes de l'appareil de personnalisation, à savoir un magasin (alimentation 1, rebut 7, réception 6) ou un lecteur-encodeur 5. La pince 3 reste alors fixe le long de l'axe Y, tandis que le chariot 4.1 se déplace le long de l'axe X.

Le second (l'axe Y), perpendiculaire à l'axe X, correspond à l'avancement (respectivement au retrait) de la pince 3 vers un magasin (1, 6, 7) ou un lecteur-encodeur 5 (respectivement d'un magasin ou d'un lecteur-encodeur). Le chariot 1 reste alors fixe, tandis que la pince 3 est mobile le long de l'axe Y.

Les déplacements selon l'axe X sont commandés par un moteur M22, de préférence un moteur à courant continu. Le dispositif comporte deux tubes de guidage 4.2 et 4.3 sur lesquels est logé le chariot 4.1. Une courroie 4.4 est tendue entre un galet 4.5 monté sur l'axe du moteur M22 et un galet de renvoi 4.6. Le chariot 4.1 est également fixé à cette courroie 4.4 et se déplace sous l'action de la rotation de la courroie 4.4, elle-même mue par le mouvement de rotation de l'arbre du moteur M22.

Deux interrupteurs SW220 et SW221 sont prévus aux deux entrémités, de part et d'autre de la course du chariot pour interrompre la commande du moteur M22 en cas de surcourse. Ce sont des micro-interrupteurs QS à levier à roulette du type AN 3266. La course du chariot est limitée sur un côté par la position du chariot 4.1 devant le magasin d'alimentation 1 (position initiale), et sur l'autre par la position devant un magasin de sortie, par exemple dans le mode de réalisation décrit, le magasin de réception 6 des cartes personnalisées.

Parallèlement aux tubes de guidage 4.2 et 4.3 est fixée une règlette 4.7 comportant un certain nombre de trous correspondant aux différentes positions des trois magasins (1, 6, 7) et des cinq lecteurs-encodeurs 5. Ces trous sont détectés par une cellule optique à transmission C221 située à la base de la pince, du côté du chariot. Celle-ci "voit" donc les différents trous situés sur la règlette 4.7 et émet un signal à la logique de commande à chaque trou détecté, lorsque cette cellule C221 n'est plus occultée.

Le énième signal correspondant au énième trou détecté est interprété comme un signal d'arrêt par la logique de commande qui arrête alors le moteur M22. Le chariot se trouve ainsi positionné devant le poste désiré.

La vitesse de déplacement du chariot étant relativement grande (de l'ordre de 200 mm/sec.), le chariot ne s'arrête pas instantanément et la précision obtenue sur la position d'arrêt peut alors être médiocre. L'interprétation des signaux et l'arrêt du moteur sont exécutés quasi-instantanément. L'arbre du moteur M22 a également un moment d'inertie, ainsi que la courroie, ce qui contribue également à un mauvais positionnement du chariot.

Pour cette raison, dans un mode de réalisation préférentiel, deux autres cellules C220 et C222, identiques à C221, sont placées de part et d'autre de la cellule C221. Celles-ci détectent également les trous de la règlette et au énième trou recherché, déclenchent un signal interprété par la logique de commande, comme un signal de ralentissement.

La cellule C220 intervient dans le cas d'un déplacement en direction de la position initiale (magasin d'alimentation 1), tandis que la cellule C222 intervient dans le cas d'un déplacement de direction provenant de la position initiale.

La cellule C221 transmet alors un signal d'arrêt complet. Les précisions de positionnement obtenues sont bien meilleures et de l'ordre de ± 0,5 mm.

Les déplacements selon l'axe Y sont commandés par un moteur M21, de préférence un motoréducteur. L'arbre du moteur M21 est relié par une courroie à un galet de renvoi 4.8, lequel à l'aide d'une courroie 4.9 et d'une vis sans fin, engendre un mouvement linéaire de la pince 3. La vitesse de déplacement linéaire de la pince 3 selon l'axe Y doit être choisie entre 50 et 100 mm/sec. pour permettre au lecteur magnétique 5 de pouvoir lire correctement les données codées sur la piste magnétique. La lecteure de telles données nécessite en effet le défilement de cette piste au dessus d'une tête de lecture.

Dans le mode de réalisation de la présente invention, cette vitesse a été choisie de l'ordre de 60 mm/sec.

Comme dans le cas du déplacement le long de l'axe X, deux interrupteurs à levier à roulette de fin de course SW 210 et SW 211 sont prévus aux deux extrémités de la course de la pince afin d'interrompre la commande du moteur M21 en cas de surcourse. Ils correspondent respectivement à la position en retrait de la pince 3 et à la position avancée de la pince. On obtient ainsi une précision de positionnement de l'ordre du millimètre.

Sur la figure 5a, on a représenté la position de la pince en retrait. Comme indiqué précédemment, la sécurité SW 210 permet d'interrompre la commande du moteur en cas de surcourse dans la position de retrait. Un autre capteur C 210, situé en saillie par rapport au chariot et monté sur celui-ci est prévu pour instruire la logique de commande sur la position "retrait de la pince". Cette cellule C 210 est occultée par un drapeau monté sur la pince lorsque celle-ci se positionne en retrait. La logique de commande est alors instruite de l'étape effectuée et peut exécuter la suivante. Cette étape sera donc en général un déplacement le long de l'axe X pour rechercher un poste déterminé.

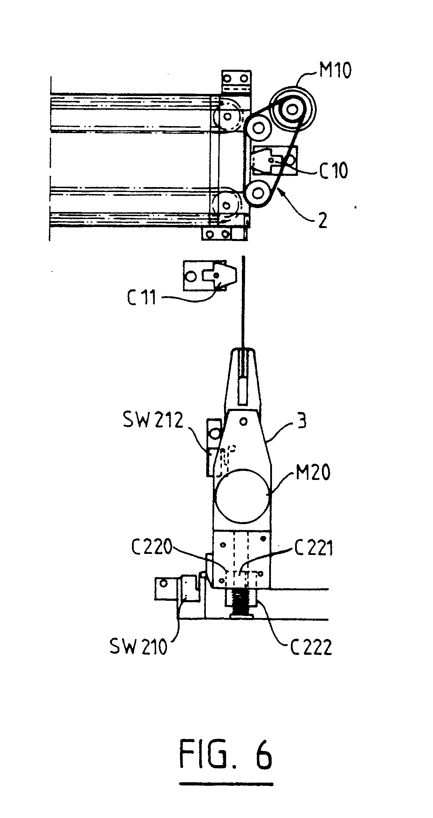

On se réfère maintenant aux figures 6, 7, 8 qui illustrent différents modes de fonctionnement de la pince. Sur la figure 6, la pince 3 est représentée en position avancée devant le magasin d'alimentation 1. Dans ce cas, la pince est prête à extraire une carte. Un interrupteur SW 212 est placé à l'entrée de chaque magasin pour interrompre la commande du moteur M21. Dans le cas d'une opération d'extraction, ainsi d'ailleurs que dans le cas d'une opération de rangement d'une carte, il n'est en effet pas nécessaire que la pince se déplace jusqu'à l'extrémité de sa course normale. Les magasins sont en effet placés en légère avancée par rapport aux lecteurs-encodeurs d'une part ; les cartes sont d'autre part prises en compte par les dispositifs de séparation (ou de rangement), ce qui ne nécessite pas un tel avancement de la pince. L'interrupteur SW 212 assure donc cette tâche.

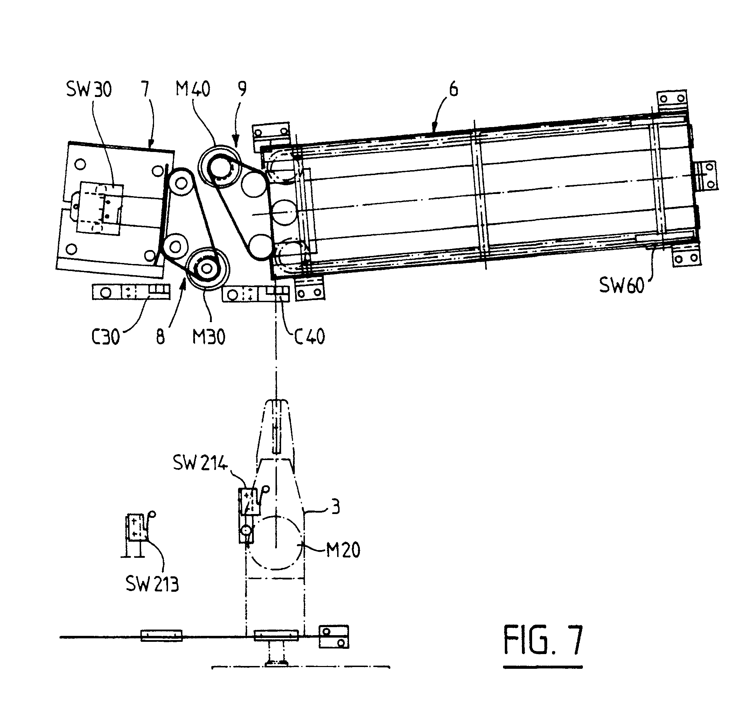

Sur la figure 7, la pince est représentée en position avancée devant le magasin de réception 6 des cartes valides. Comme pour le magasin d'alimentation 1, un interrupteur SW 214, de type microinterrupteur à levier à roulette interrompt la commande du moteur M21 d'avancée de la pince afin que la pince se positionne correctement devant le dispositif de rangement 9. Il en est de même du magasin de rebut 7, muni d'un microinterrupteur SW 213.

Les magasins de sortie sont également représentés sur cette figure. Il s'agit du magasin de rebut 7 pour cartes défectueuses et du magasin de réception 6 pour cartes personnalisées, ainsi que de leurs dispositifs de rangement associés 9 et 8.

Le magasin de réception 6 est en fait identique au magasin d'alimentation 1, précédemment décrit à la figure 4. Il s'agit donc là encore d'une cassette amovible, de dimension standard 90 X 90 X 300mm, pouvant contenir environ 200 cartes embossées.

Il n'est par contre pas prévu de capteur de magasin de réception vide, cette hypothèse ne devant entraîner aucune conséquence dans le déroulement des opérations. Il n'a pas non plus été prévu d'interrupteur (ou de capteur), de magasin de réception plein. La cassette de réception 6 doit en effet être enlevée et remplacée par une cassette vide, chaque fois qu'une cassette d'entrée est changée.

Bien que cela ne soit pas indispensable, on peut prévoir un interrupteur SW 60, interrompant l'automate pendant le remplacement d'une cassette de réception (au moins).

Il lui est associé un dispositif de rangement 9 identique au dispositif de séparation de la figure 4. Au lieu d'extraire les cartes, ce dispositif les empile verticalement dans le magasin de réception 6. Un capteur C40 commande le moteur M40 du dispositif de rangement 9 tant que la carte est présente devant le capteur C40. Contrairement au capteur C11 de la figure 4, le capteur C40 est placé sur le bord externe du magasin de réception 6, afin que, lorsque le capteur C40 ne "voit" plus la carte, celle ci soit déjà correctement empilée dans le magasin 6. Un court temps de latence peut être prévu pour que le moteur M40 ne s'arrête que lorsque la carte à empiler est correctement introduite dans le magasin de réception 6.

Le magasin de rebut 7 propre à contenir les cartes défectueuses est de nature identique aux deux autres magasins 1 et 6 déjà décrits, mais a des dimensions réduites, typiquement 75 X 90 X 90 mm car il n'est pas susceptible de contenir un grand nombre de cartes, en moyenne au plus 30 cartes. Le magasin de rebut 7 est également muni d'un interrupteur SW30 placé au fond du magasin 7 indiquant un état de magasin de rebut plein. Il lui est associé un dispositif de rangement 8 identique à ceux précédemment décrits. Pour des raisons de commodité, le moteur M30 se trouve cependant sur le côté interne de l'automate. Un capteur C30 commande ce moteur M30.

Les magasins 6 et 7 sont légèrement inclinés dans des directions opposées sur l'axe magasins-lecteurs-encodeurs. Une telle inclinaison favorise en effet une meilleure préhension de la carte par les dispositifs de rangement 8,9 ainsi qu'une introduction plus aisée dans les magasins 6,7.

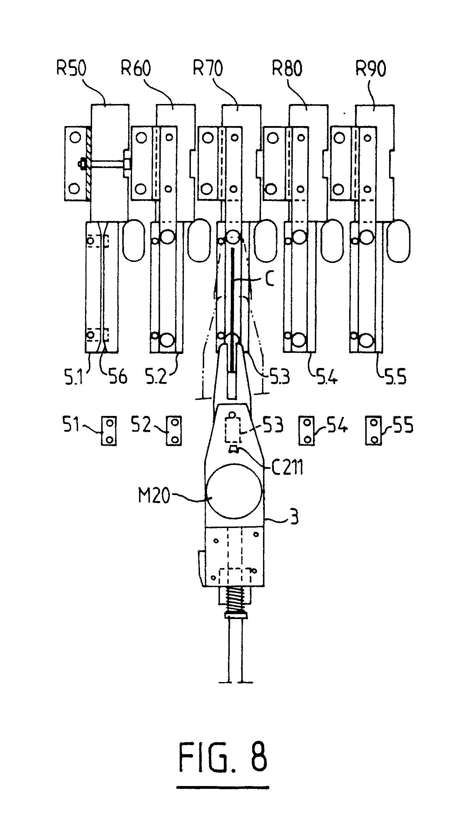

Sur la figure 8, la pince 3 est en position avancée devant l'un des lecteurs-encodeurs. Dans ce cas, le pince se déplaçant à une vitesse uniforme s'est déplacée jusqu'à la fin de sa course en introduisant la carte bancaire C dans le lecteur-encodeur 5.3. Ce dernier peut ainsi lire les données codées sur la piste magnétique. Afin que la logique de commande L soit instruite de la position avancée de la pince 3 devant l'un des lecteurs-encodeurs et qu'elle commande alors l'interruption du moteur M21 lorsque la pince 3 à atteint la position désirée, il est prévu un capteur C211, placé au dessous de la pince 3. La cellule C211, du type capteur à transmission, est occultée par un drapeau 53, disposé en regard du lecteur-encodeur correspondant. L'interrupteur de surcourse SW211 déjà cité, assure l'arrêt du moteur M21 en cas de mauvais fonctionnement de la cellule C211.

Sur la même figure, on à représenté les lecteurs-encodeurs 5.1 à 5.5. Dans le mode de réalisation préférentiel de l'invention, les cartes bancaires sont en effet des cartes mixtes, comportant à la fois une piste magnétique et un micro-circuit. Les lecteurs-encodeurs doivent donc être à même de lire les informations provenant de la piste magnétique, de les transmettre aux disques de l'unité de commande U où sont mémorisées toutes les autres informations dépendantes et de les encoder sur le micro-circuit.

Compte tenu des données pratiques et économiques actuelles, le nombre de lecteurs-encodeurs à été limité à cinq. Ces lecteurs-encodeurs sont rangés l'un à la suite de l'autre, à intervalle de 45 mm.

Le lecteur-encodeur mixte 5 comprend donc d'une part un lecteur manuel du commerce pour la lecture de la piste IS02. D'autre part, et sur l'arrière, dans le prolongement de celui-ci est placé un conecteur de carte à mémoire du type Bull CP8, par exemple.

La carte saisie par la pince est donc d'abord insérée dans le lecteur magnétique à la vitesse de 60 mm/s. Lorsque la carte atteint l'arrière du lecteur mixte, elle a été lue par le lecteur magnétique et elle se trouve en position correcte pour l'opération de personnalisation. Elle est alors lâchée par la pince qui se retire.

La position correcte de la carte dans un lecteur-encodeur mixte est indiquée par un contact (R50, R60, ..., R90) située à l'arrière du lecteur-encodeur mixte. C'est ce signal qui d'une part provoque le lâcher de la pince 3 et le retrait de la pince 3, d'autre part déclenche l'opération de personnalisation.

Afin d'absorber les défauts de positionnement au niveau des lecteurs-encodeurs, ces derniers sont munis à leur entrée d'un dispositif de guidage à lèvres évasées (par exemple 56 pour 5.1). Tout autre dispositif propre à conduire adéquatement les cartes à l'intérieur des lecteurs-encodeurs mixtes peut être utilisé.

Il est également prévu un dispositif de guidage placé au dessus du lecteur magnétique afin que l'insertion de la carte à l'intérieur du lecteur se fasse correctement. La carte C est acheminée jusqu'au fond du lecteur-encodeur par la pince 3 elle-même. On peut également prévoir des petits rouleaux de transport qui introduiraient la carte et l'extrairaient en permettant à la pince 3 de rester positionnée en regard du lecteur-encodeur.

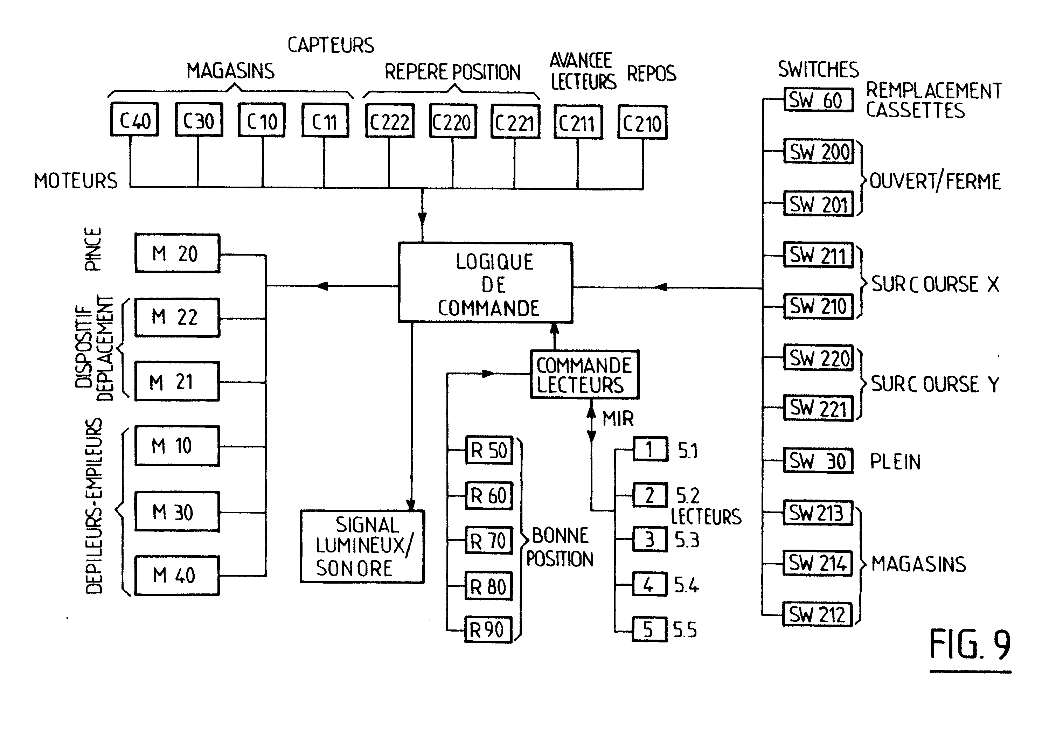

L'unité de commande U qui gère les opérations de personnalisation est dans un mode de réalisation, un micro ordinateur, du type compatible IBM-PC, à 256 kilooctets de RAM et comportant deux lecteurs de disquettes 5" 1/4. Celui-ci envoie un signal indiquant une opération de personnalisation à la logique de commande L de l'automate, tant que cette opération est en cours. A la fin de cette opération, le micro-ordinateur envoie alors un signal de fin à la logique de commande L qui le mémorise. Les signaux de fin sont notés MCR50,..., 90. La figure 9 illustre schématiquement comment les différents ensembles de l'appareil sont reliés à la logique de commande l'automate, qui en gère toutes les opérations ainsi que ses relations avec la commande des lecteurs-encodeurs U.

Très généralement, on peut distinguer les entrées et les sorties.

Les entrées sont les signaux envoyés par les différents capteurs et interrupteurs ainsi que les signaux émis par la commande des lecteurs-encodeurs U.

On remarque sur ce schéma que les opérations de personnalisation elle-mêmes sont indépendantes de la logique de commande L mais sont gérées par la commande des lecteurs-encodeurs U.

Le capteur C10 envoie un signal de magasin vide à la logique L. Conjointement avec le capteur C11, il permet l'affichage du signal "magasin d'alimentation vide" et entraîne l'arrêt du moteur M10. Ces capteurs C11, C30 et C40 régissent l'extraction ou le chargement d'une carte. Ils ont respectivement une action sur les moteurs M10, M30 et M40 et peuvent déclencher un signal "défaut de séparation" ou "défaut de rangement". Ils actionnent également le moteur M20 (ouverture ou fermeture de la pince 3).

L'interrupteur SW30 permet l'affichage du signal "magasin de rebut plein" et peut provoquer l'arrêt d'un ou de plusieurs moteurs, voire de tous (arrêt de l'automate par crainte d'endommager les cartes).

Quant à l'interrupteur SW60, il indique qu'un remplacement de cassette de réception est en cours, ce qui, dans un mode de réalisation préférentiel, provoque l'arrêt de tous les moteurs.

Les capteurs C220, C221 et C222 permettent de positionner le chariot 4.1 et ont une action sur le moteur M22. Les capteurs C211 et C210 instruisent la logique L sur la position de la pince 3 sur l'axe Y, ce qui lui permet d'effectuer l'étape suivante. (actionnement du moteur M20 dans le cas du capteur C211, actionnement du moteur M22 dans le cas du capteur C210).

Les interrupteurs SW200 et SW201 sont des interrupteurs actionnant l'ouverture et la fermeture de la pince 3 (action sur le moteur M20). Quant aux interrupteurs SW 210 et SW 211, SW220 et SW221, ils ont une action respectivement sur les moteurs M21 ou M22 en cas de surcourse de déplacement. Enfin les contacts R50, ..., R90 (contacts de relais reed) ont une action sur la commande de lecteurs-encodeurs U, puisqu'ils initialisent l'opération de personnalisation. Le micro-ordinateur U qui commande les lecteurs-encodeurs 5 envoie un signal "opération en cours" ou "fin d'opération" à la logique de commande L qui le mémorise.

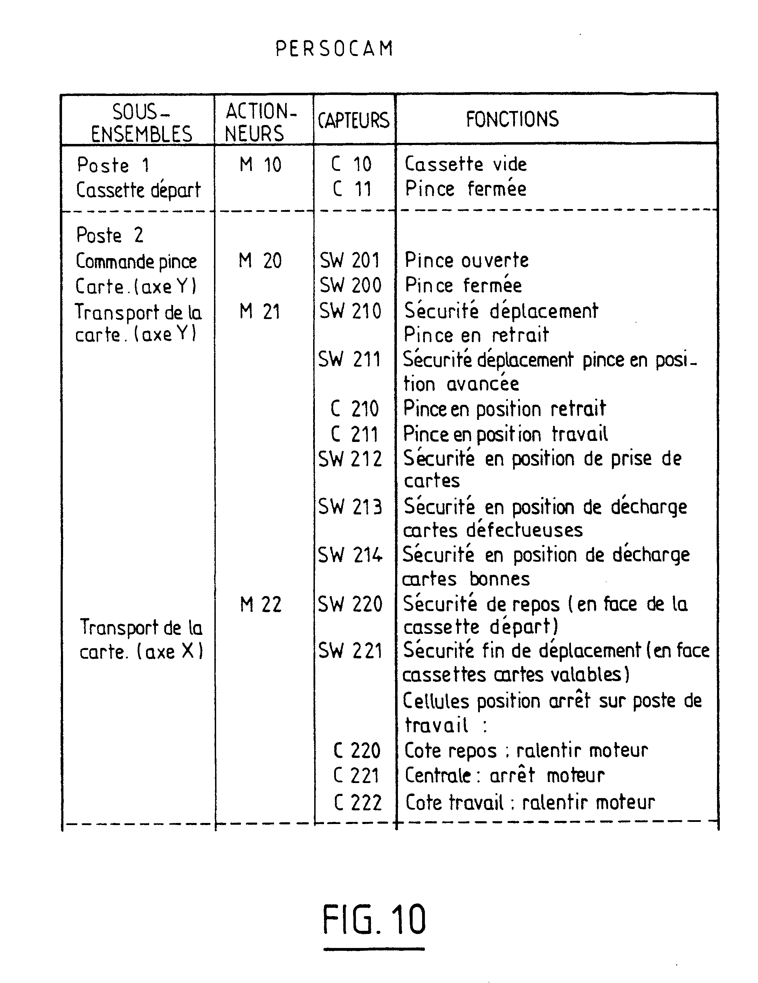

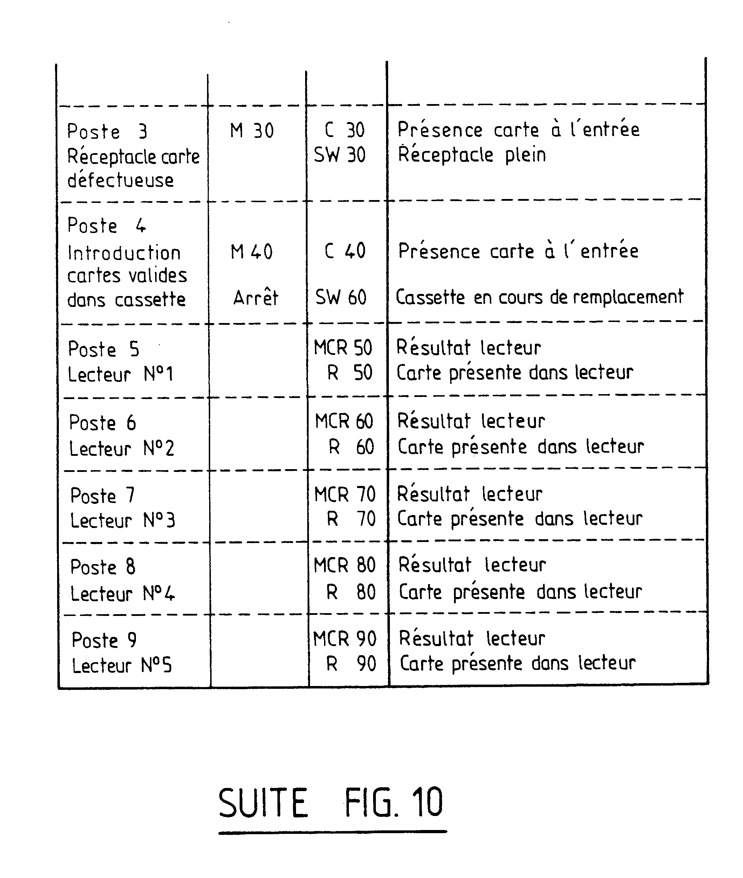

Ces différentes fonctions propres à chaque capteur ou chaque interrupteur sont reprises dans le tableau de la figure 10.

Ce tableau présente quatre colonnes indiquant pour chaque poste opérationnel (c'est à dire chaque sous-ensemble relatif à une opération), le moteur actionné et les capteurs ou interrupteurs commandant ce moteur. La dernière colonne traduit alors en termes de fonctions l'action concernée. En reprenant par exemple le déroulement logique d'une opération complète de personnalisation, le moteur M10 est commandé par les capteurs C10 et C11, C10 indiquant un magasin d'alimentation vide tandis que C11, s'il est déclenché, n'envoie aucun signal à M20 pour que la pince s'ouvre.

C'est bien sûr le moteur M20 qui commande la pince. Les interrupteurs SW201 et SW200 déterminent l'état de la pince (pince ouverte ou fermée).

Le reste du tableau reprend donc sous une autre forme la figure 9 précédemment décrite.

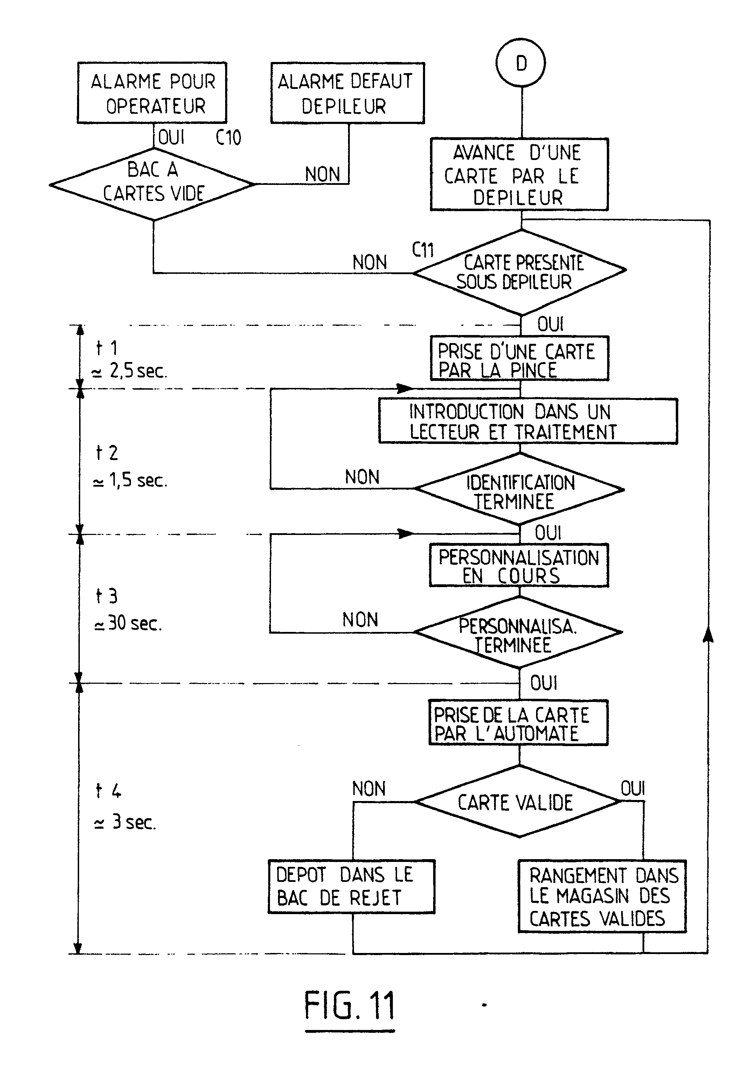

La figure 11 illustre un diagramme séquentiel des opérations de personnalisation relatives à une carte. La carte à personnaliser doit d'abord être avancée par le dépileur. Deux cas se présentent alors :
- la carte n'est pas présente, ce qui implique, ou bien, que le magasin d'alimentation 1 est vide, ou bien, que le système de séparation des cartes 2 présente une anomalie. Dans les deux cas, un signal d'alarme est émis ;
- la carte est présente sous le dépileur 2.

Dans le dernier cas, elle est saisie par la pince 3 et transférée jusqu'au lecteur-encodeur 5. Cette opération dure en moyenne 2,5 s. La carte est alors introduite dans le lecteur-encodeur 5, pour être lue par le lecteur magnétique, opération qui dure 1,5 s. Une fois terminée l'identification à l'aide de la piste magnétique, celle-ci est personnalisée. Le temps de personnalisation des micro-circuits est dans l'état de la technique actuelle de l'ordre de 30 s à 40 s pour l'application bancaire visée.

A la fin de l'opération de personnalisation, la carte est reprise par la pince 3 et transférée, selon qu'elle est défectueuse ou non, dans l'un des magasins de sortie 6 ou 7. Cette opération dure environ 3 s. Ainsi, l'opération complète depuis la position initiale de la carte dans le magasin d'alimentation 1 jusqu'à la position finale dans l'un des magasins de sortie 6 ou 7, dure 9,5 s. en moyenne à l'exclusion de l'opération de personnalisation. Il est donc possible de gérer 4 à 5 lecteurs-encodeurs mixtes 5 avec le même automate, lorsque le temps de personnalisation dure entre 30 et 40 s.

Il serait possible , bien sûr, de gérer d'avantage de lecteurs-encodeurs mais les coûts encourus alors ne se justifient pas car la répartition temporelle est optimisée pour 4 ou 5 lecteurs-encodeurs. Au delà, le degré d'optimisation décroît.

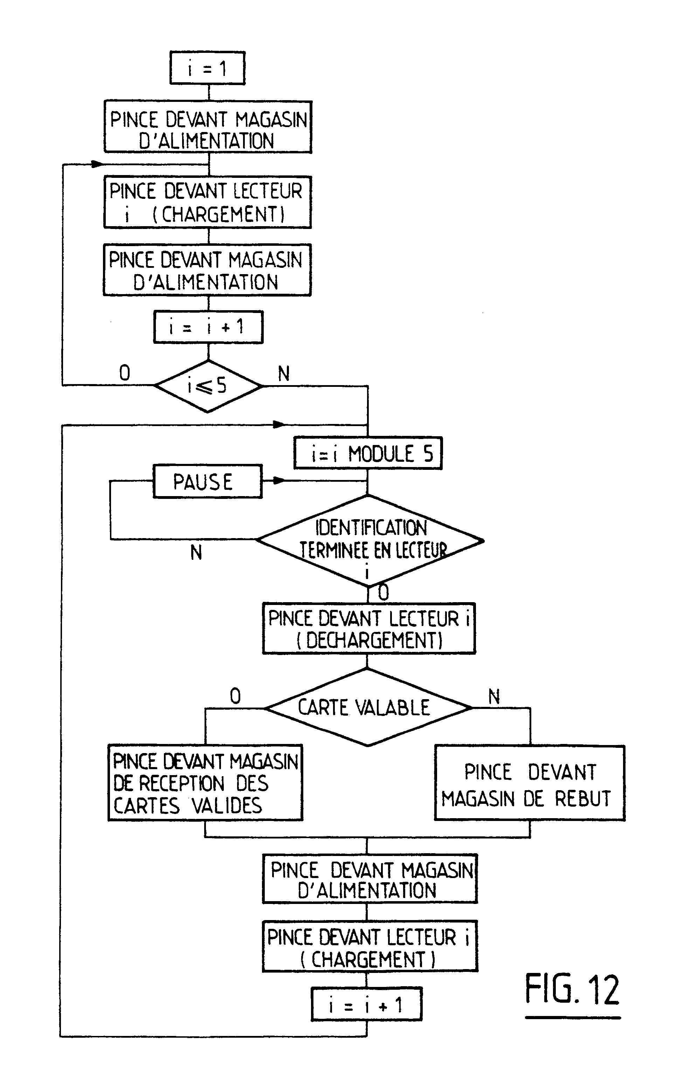

Sur la figure 12, on a représenté le diagramme de gestion des opérations de personnalisation pour tous les lecteurs-encodeurs. Le diagramme admet comme hypothèses :
- qu'en régime établi, un déchargement de carte est suivi aussitôt d'un chargement d'une nouvelle carte ;
- que, si l'opération de personnalisation pour un lecteur-encodeur n'est pas terminée, le lecteur-encodeur suivant immédiatement est pris en considération ;
- que les opérations de personnalisation sur les différents lecteurs-encodeurs se font séquentiellement (lecteur-encodeur 5.1 à 5.5, puis de nouveau lecteur-encodeur 5.1) ;
- que les cartes dans le magasin de réception 6 des cartes valides doivent être disposées dans la même ordre que celui dans le magasin d'alimentation 1.

Ces hypothèses permettent d'établir un algorithme simple et efficace. D'autres hypothèses peuvent être envisagées sans que cela modifie la portée de cette invention. On pourrait par exemple considérer que si l'opération de personnalisation d'un lecteur-encodeur A n'est pas terminée, l'automate passe au suivant B et retourne ensuite en A pour s'assurer que l'opération est terminée. Ensuite, il passerait au lecteur-encodeur C, suivant le lecteur-encodeur B.

Les rectangles de la figure 12 indiquent la position de la pince 3. Les opérations ouverture/fermeture de la pince et de déplacement ont été sous-entendues.

La pince est donc d'abord en position initiale, devant le magasin d'alimentation 1. A l'instant t = 4 s, elle a introduit la carte dans le lecteur-encodeur 5.1.

Elle revient alors au magasin d'alimentation et charge de nouveau une carte dans le lecteur-encodeur 5.2. Ainsi de suite jusqu'à ce que la pince ait chargé le lecteur 5.5. Il s'est alors écoulé 25 s.

La pince peut alors être programmée pour attendre quelques secondes de manière à ce que 30 s. soient écoulées, correspondant au temps de personnalisation de la carte du lecteur-encodeur 5.1.

La logique de commande L examine alors si l'opération de personnalisation est terminée. Dans ce cas, elle examine si la carte est valide. Ces deux informations personnalisation terminée-validité sont envoyées conjointement par la commande des lecteurs U à la logique de commande L à la fin de chaque opération de personnalisation. Selon la validité de la carte, la pince qui s'est déplacée vers le lecteur-encodeur 5.1, décharge la carte dans l'un des magasins désignés.

Elle retourne alors aussitôt au magasin d'alimentation 1 et charge le lecteur-encodeur 5.1 qui était vide. Elle va ensuite au lecteur-encodeur 5.2 et procède comme précédemment décrit.

Dans le cas où une opération de personnalisation ne serait pas terminée, la pince, programmée par la logique de commande L, marque un temps de pause et attend que l'opération du lecteur-encodeur en jeu soit terminée.

L'automate procède ainsi jusqu'au cinquième lecteur-encodeur et recommence le cycle à partir du premier lecteur-encodeur.

Si les temps de personnalisation sont connus et constants, un ajustement précis de la séquence permet d'éviter la branche "opération de personnalisation non terminée" et évite que la pince soit oisive pendant quelques secondes.

Au sein des cinq premières étapes de l'algorithme de la figure 12 (phase de chargement des lecteurs-encodeurs), on peut insérer un test déterminant si le premier lecteur-encodeur chargé a déjà terminé l'opération de personnalisation. Si oui, le chargement initial des lecteurs-encodeurs s'interrompt et ne peut donc intéresser que 3 ou 4 lecteurs-encodeurs, au lieu des 5 lecteurs d'abord prévus. Le reste de l'algorithme reste inchangé et se poursuit sur ces seuls lecteurs-encodeurs.

Bien entendu, la présente invention n'est pas limitée aux modes de réalisation décrits. Bien qu'il soit avantageux de n'utiliser que quatre ou cinq lecteurs-encodeurs, on peut bien entendu utiliser un plus grand nombre de lecteurs-encodeurs en fonction de la solution de la technique actuelle.

Comme déjà indiqué, la personnalisation des cartes peut se faire à la suite d'une lecture optique des caractères estampés sur la carte, par exemple à l'aide d'un lecteur OCR. De tels lecteurs peuvent être placés au niveau de chaque unité de personnalisation, ou bien un seul lecteur est mis en commun en sortie du magasin d'alimentation.

Plus généralement, les données à personnaliser peuvent être acquises par tout autre dispositif de lecture des données présentes sur la carte, par exemple par lecture laser d'inscriptions à microperforations.

Il en est de même des hypothèses déterminant l'algorithme d'optimisation de l'automate. D'autres contraintes peuvent être envisagées, qui modifient alors sensiblement l'algorithme de programmation.

Selon une autre variante, les informations de base sont reçues par téléchargement et toutes les opérations de personnalisation de la carte sont effectuées dans l'appareil, à savoir l'embossage, l'encodage magnétique et le chargement du microcircuit.

Par ailleurs, certaines cartes portent le microcircuit non pas dans un coin, mais près du milieu d'une des largeurs de la carte. On pourra bien entendu adapter en conséquence les lecteurs-encodeurs ainsi que la position de préhension d'une carte par la pince.

Enfin, d'autres capteurs ou interrupteurs peuvent s'avérer nécessaires, sinon indispensables, pour assurer un meilleur fonctionnement de l'automate et une plus grande sécurité.

Le téléchargement du programme de l'automate est également concevable.

## Revendications

1. Appareil de personnalisation de cartes, comprenant un dispositif de traitement desdites cartes, qui comporte plusieurs unités de personnalisation associées à une unité de commande (U) propre à gérer les opérations de personnalisation et un automate de manipulation qui comporte au moins :
   - un magasin d'alimentation (1) propre à loger les cartes à personnaliser,
   - un magasin de réception (6) propre à loger les cartes correctement personnalisées,
   - un magasin de rebut (7) propre à loger les cartes incorrectement personnalisées ou défectueuses,
   - des moyens de préhension des cartes (3) propres à :
     - extraire une carte du magasin d'alimentation (1),

- transférer la carte au niveau d'une unité de personnalisation (5),
- l'introduire dans ladite unité (5),
- la reprendre de ladite unité (5),
- la transférer au niveau du magasin de réception (6) ou du magasin de rebut (7) si elle est défectueuse,
- la décharger dans le magasin de réception (6) ou dans le magasin de rebut (7) si elle est défectueuse,

une logique de commande (L) étant prévue et reliée à l'unité de commande (U) pour gérer les opérations de personnalisation, caractérisé par le fait que :

- chaque unité de personnalisation (5) est du même type,
- l'automate de manipulation comprend un dispositif de déplacement (4) bi-directionnel propre à se déplacer le long d'un axe (X) de manière à pouvoir s'arrêter devant l'une des unités de personnalisation, et des moyens de préhension (3) des cartes montés sur le dispositif de déplacement (4) de manière à pouvoir se déplacer le long d'un second axe (Y), perpendiculaire au premier axe (X),
- le temps requis pour une opération de personnalisation est supérieur à celui nécessaire pour gérer l'unité de personnalisation avec l'automate et la logique de commande (L) est apte à actionner lesdits moyens de préhension (3) et le dispositif de déplacement (4) de manière à intercaler, pendant une opération de personnalisation dans une unité de personnalisation (5), une ou plusieurs opérations d'extraction, de transfert ou de chargement d'une carte relative à une ou plusieurs autres unités de personnalisation disponibles (5),

les opérations de personnalisation étant effectuées ainsi simultanément sur plusieurs cartes en prenant en considération une autre unité si l'opération de personnalisation pour une unité n'est pas terminée.

2. Appareil de personnalisation de cartes selon la revendication 1, caractérisé en ce que l'automate comprend en outre :

- un dispositif séparateur de cartes (2) associé au magasin d'alimentation (1), propre à extraire en partie une carte dudit magasin (1) ;
- des dispositifs de rangement des cartes (9, 8), respectivement associés au magasin de réception (6) et au magasin de rebut (7), propres à ranger une carte dans l'un desdits magasins (6, 7).

3. Appareil de personnalisation de cartes selon l'une des revendications 1 ou 2, caractérisé en ce que les cartes sont des cartes comprenant au moins une piste magnétique codée et un micro-circuit non codé, l'opération de personnalisation consistant au codage du micro-circuit à l'aide des données présentes sur la carte et/ou des informations emmagasinées dans l'unité de commande (U).

4. Appareil de personnalisation de cartes selon la revendication 3, caractérisé en ce que les unités de personnalisation (5) sont des lecteurs-encodeurs mixtes de cartes à piste magnétique et à micro-circuit, comprenant un connecteur de carte à mémoire.

5. Appareil de personnalisation de cartes selon l'une des revendications 1 à 4, caractérisé en ce que les magasins d'alimentation (1) et de réception (6) se présentent sous la forme de cassettes interchangeables et amovibles.

6. Appareil de personnalisation de cartes selon l'une des revendications 1 à 5, caractérisé en ce qu'au moins un capteur (C10) est associé au magasin d'alimentation (1) afin de détecter si celui-ci est vide.

7. Appareil de personnalisation de cartes selon l'une des revendications 1 à 6, caractérisé en ce qu'au moins un interrupteur d'état (SW30) est associé au magasin de rebut (7) afin de détecter si celui-ci est plein.

8. Appareil de personnalisation de cartes selon une des revendications 2 à 7, caractérisé en ce que les dispositifs de séparation (2) ou de rangement (6, 7) des cartes comprennent au moins un moteur préférablement réducteur (M10, M40, M30 respectivement) et une courroie de caoutchouc préférablement revêtue d'une couche siliconée.

9. Appareil de personnalisation de cartes selon une des revendications 2 à 8, caractérisé en ce que le dispositif de séparation (2) comprend au moins un capteur (C11) afin de détecter si une carte est sortie du magasin d'alimentation (1), la commande du moteur du dispositif de séparation (M10) étant maintenue tant que ladite carte n'est pas détectée par ledit capteur (C11).

10. Appareil de personnalisation de cartes selon la revendication 9, caractérisé en ce que ledit capteur (C11) transmet à la logique de commande (L) un signal de défaut de séparation si la carte à extraire n'est pas détectée par le capteur (C11) au bout du temps normalement prévu pour l'opération d'extraction, ce signal pouvant être également interprété par la logique de commande (L) comme un signal de magasin d'alimentation vide si la logique de commande reçoit simultanément un signal du capteur (C10) associé au magasin d'alimentation (1).

11. Appareil de personnalisation de cartes selon une des revendications 2 à 10, caractérisé en ce que chaque dispositif de rangement (6) (respectivement (7)) comprend au moins un capteur (C40) (respectivement (C30)) afin de détecter si une carte est présente à l'entrée du magasin de réception (6) (respectivement du magasin de rebut (7)), la commande du moteur (M40) (respectivement (M30)) de chaque dispositif de rangement (6) (respectivement (7)) étant maintenue tant que ladite carte est détectée par ledit capteur (C40) (respectivement (C30)).

12. Appareil de personnalisation de cartes selon une des revendications 1 à 11, caractérisé en ce que les moyens de préhension des cartes comprennent une pince (3) commandée préférablement par un moteur réducteur (M20) associé à un excentrique.

13. Appareil de personnalisation de cartes selon la revendication 12, caractérisé en ce qu'il est associé à ladite pince (3) au moins deux interrupteurs (SW200, SW201) d'état commandant respectivement les positions ouverte et fermée de la pince (3).

14. Appareil de personnalisation de cartes selon la revendication 12 ou 13, caractérisé en ce que la pince (3) présente deux degrés de liberté pour absorber les erreurs de positionnement au niveau des lecteurs (5) et qui sont rendus possibles par l'action d'un ressort (3.3) et de rondelles flexibles disposés dans la mécanisme de la pince (3).

15. Appareil de personnalisation de cartes selon une des revendications 1 à 14, caractérisé en ce que le dispositif comprend :
 - un moteur préférablement à courant continu (M22), permettant le déplacement des moyens de préhension (3) le long d'un premier axe (X) correspondant aux positions d'arrêt desdits moyens (3) devant un magasin (1, 6, 7) ou une unité de personnalisation (5),
 - un moteur préférablement réducteur (M21), permettant le déplacement des moyens de préhension (3) le long d'un second axe (Y) correspondant au transfert d'une carte entre les moyens de préhension (3) et une unité de personnalisation (5) ou un magasin (1, 6, 7).

16. Appareil de personnalisation de cartes selon la revendication 15, caractérisé en ce que le dispositif de déplacement (4) muni d'au moins une cellule (C221) permettant la localisation de l'unité de personnalisation (5) ou du magasin sélectionné (1, 6, 7) le long du premier axe de déplacement (X).

17. Appareil de personnalisation de cartes selon la revendication 16, caractérisé en ce qu'il est associé à ladite cellule (C221) au moins deux autres cellules (C220, C222), situées de part et d'autre de ladite cellule (C221), permettant le ralentissement du dispositif de déplacement (4) à l'approche d'une unité de personnalisation (5) ou du magasin sélectionné (1, 6, 7) le long du premier axe de déplacement.

18. Appareil de personnalisation de cartes selon une des revendications 15 à 17, caractérisé en ce que le dispositif de déplacement (4) comprend au moins deux interrupteurs de sécurité (SW220, SW221) détectant une surcourse le long du premier axe (X), respectivement prévus à la position initiale et à la position finale dudit dispositif sur cet axe (X).

19. Appareil de personnalisation de cartes selon une des revendications 15 à 18, caractérisé en ce que le dispositif de déplacement (4) est muni d'au moins deux interrupteurs de sécurité détectant une fin de course (SW210, SW211) le long du second axe (Y), respectivement prévus à la position de retrait et à la position avancée de la pince (3) le long de cet axe (Y).

20. Appareil de personnalisation de cartes selon une des revendications 15 à 19, caractérisé en ce qu'il est associé au dispositif de déplacement (4) au moins un capteur (C210) pour détecter la position de retrait des moyens de préhension (3) le long du second axe (Y), tandis que les moyens de préhension (3) sont munis d'un autre capteur (C211) qui, occulté par un drapeau disposé à l'entrée de chaque unité de personnalisation (5), indique la position d'avancement des moyens de préhension (3) devant lesdites unités de personnalisation (5).

21. Appareil de personnalisation de cartes selon une des revendications 15 à 20, caractérisé en ce qu'il est associé au dispositif de déplacement (4) au moins un interrupteur, (SW212, SW213, SW214), placé à l'entrée de chaque magasin, (1, 6, 7) permettant de positionner la pince (3) devant le magasin correspondant (1, 6, 7).

22. Appareil de personnalisation de cartes selon une des revendications 1 à 21, caractérisé en ce que les unités de personnalisation (5) comprennent chacune un assemblage de guidage propre à permettre l'introduction correcte d'une carte dans ladite unité (5) et de compenser les écarts de positionnement.

23. Appareil de personnalisation de cartes selon une des revendications 1 à 22, caractérisé en ce que chaque unité de personnalisation (5) comprend un contact (R50, R60, R70, R80, R90), indiquant l'introduction et le positionnement correct d'une carte dans ladite unité (5) et transmettant un signal à l'unité de commande (U) des unités de personnalisation (5) initialisant l'opération de personnalisation.

24. Appareil de personnalisation de cartes selon une des revendications 1 à 23, caractérisé en ce que l'unité de commande (U) des unités de personnalisation envoie une série de signaux à la logique de commande (L) indiquant :
- l'état de disponibilité des unités de personnalisation (5),
- l'état d'achèvement de l'opération de personnalisation en cours dans les unités de personnalisation en fonctionnement (5),
- l'état de fin d'opération de personnalisation de la carte en traitement dans l'unité de personnalisation (5),
- le résultat de l'opération de personnalisation pour ladite carte.

**Claims**

1. Apparatus for personalisation of cards, comprising a mechanism for the treatment of the said cards, which possesses a plurality of personalisation units associated with a control unit (U) suitable for managing the personalisation operations and an automatic handling device which possesses at least:
- one feed magazine (1) suitable for housing the cards to be personalised,
- one reception magazine (6) suitable for housing the cards which are correctly personalised,
- one reject magazine (7) suitable for housing the cards which are incorrectly personalised or defective,
- means of gripping the cards (3) suitable for:
  - extracting a card from the feed magazine (1),
  - transferring the card to the level of a personalisation unit (5),
  - introducing it into the said unit (5),
  - picking it up again from the said unit (5),
  - transferring it to the level of the reception magazine (6) or of the reject magazine (7) if the card is defective,
  - unloading it into the reception magazine (6) or into the reject magazine (7) if the card is defective,

control logic (L) being provided and connected to the control unit (U) for managing the personalisation operations, characterised in that:
- each personalisation unit (5) is of the same type,
- the automatic handling device comprises a two-directional displacement mechanism (4) suitable for moving along an axis (X) so as to be able to stop at one of the stations (a magazine or a personalisation unit) of the personalisation apparatus, and means of gripping (3) the cards mounted on the displacement mechanism (4) so as to be able to move along a second axis (Y), perpendicular to the first axis (X),
- the time required for a personalisation operation is greater than that necessary to manage the personalisation unit with the automatic device, and the control logic (L) is able to activate the said means of gripping (3) and the displacement mechanism (4) so as to intercalate, during a personalisation operation in one personalisation unit (5), one or more operations of extraction, of transfer or of storage of a card relative to one or more other available personalisation units (5),

the personalisation operations being thus simultaneously carried out on a plurality of cards by taking into consideration another unit if the personalisation operation for one unit is not finished.

2. Apparatus for personalisation of cards according to Claim 1, characterised in that the automatic device further comprises:
- a card separating mechanism (2) associated with the feed magazine (1), suitable for partly extracting a card from the said magazine (1);

- mechanisms for storing the cards (9,8), associated respectively with the reception magazine (6) and the reject magazine (7), suitable for storing a card in one of the said magazines (6,7).

3. Apparatus for personalisation of cards according to one of Claims 1 and 2, characterised in that the cards are cards comprising at least one coded magnetic track and one uncoded micro-circuit, the personalisation operation consisting of the coding of the micro-circuit by means of information existing on the card and/or information stored in the control unit (U).

4. Apparatus for personalisation of cards according to Claim 3, characterised in that the personalisation units (5) are combined reader-encoders of magnetic track and micro-circuit cards, comprising a memory card connector.

5. Apparatus for personalisation of cards according to one of Claims 1 to 4, characterised in that the feed (1) and reception (6) magazines are in the form of interchangeable and detachable cassettes.

6. Apparatus for personalisation of cards according to one of Claims 1 to 5, characterised in that at least one sensor (C10) is associated with the feed magazine (1) in order to detect if the latter is empty.

7. Apparatus for personalisation of cards according to one of Claims 1 to 6, characterised in that at least one state-switch (SW30) is associated with the reject magazine (7) in order to detect if the latter is full.

8. Apparatus for personalisation of cards according to one of Claims 2 to 7, characterised in that the mechanisms for separation (2) or storing (6,7) of the cards comprise at least at least one motor, preferably a gear motor (M10, M40, M30 respectively), and a rubber belt, preferably coated with a siliconised layer.

9. Apparatus for personalisation of cards according to one of Claims 2 to 8, characterised in that the mechanism for separation (2) comprises at least one sensor (C11) in order to detect if a card has exited the feed magazine (1), the control of the motor of the separation mechanism (M10) being maintained so long as the said card is not detected by the said sensor (C11).

10. Apparatus for personalisation of cards according to Claim 9, characterised in that the said sensor (C11) transmits to the control logic (L) a separation fault signal if the card to be extracted is not detected by the sensor (C11) after the time normally allowed for the extraction operation, this signal being able also to be interpreted by the control logic (L) as a signal of an empty feed magazine if the control logic receives simultaneously a signal from the sensor (C10) associated with the feed magazine (1).

11. Apparatus for personalisation of cards according to one of Claims 2 to 10; characterised in that each storing mechanism (6) (or respectively (7)) comprises at least one sensor (C40) (or respectively (C30)) in order to detect if a card is present at the entrance of the reception magazine (6) (or respectively of the reject magazine (7)), the control of the motor (M40) (or respectively (M30)) of each storing mechanism (6) (or respectively (7)) being maintained as long as the said card is detected by the said sensor (C40) (or respectively (C30)).

12. Apparatus for personalisation of cards according to one of Claims 1 to 11, characterised in that the means for gripping the cards comprise a pincer (3) controlled preferably by a gear motor (M20) associated with an eccentric.

13. Apparatus for personalisation of cards according to Claim 12, characterised in that there are associated with the said pincer (3) at least two state-switches (SW200, SW201) controlling respectively the open and closed positions of the pincer (3).

14. Apparatus for personalisation of cards according to Claim 12 or 13, characterised in that the pincer (3) has two degrees of freedom to accommodate positioning errors at the readers (5) which are made possible by the action of a spring (3.3) and of flexible washers placed in the pincer mechanism (3).

15. Apparatus for personalisation of cards according to one of Claims 1 to 14, characterised in that the mechanism comprises:

- a motor, preferably a direct current motor (M22), allowing the displacement of the means of gripping (3) along a first axis (X) corresponding to the stop positions of the said means (3) in front of a magazine (1,6,7) or a personalisation unit (5),

- a motor, preferably a gear motor (M21), allowing the displacement of the means of gripping (3) along a second axis (Y) corresponding to the transfer of a card between the means of gripping (3) and a personalisation unit (5) or a magazine (1,6,7).

16. Apparatus for personalisation of cards according to Claim 15, characterised in that the displacement mechanism (4) is equipped with at least one cell (C221) allowing the positioning of the personalisation unit (5) or of the selected magazine (1,6,7) along the first displacement axis (X).

17. Apparatus for personalisation of cards according to Claim 16, characterised in that there are associated with the said cell (C221) at least two other cells (C220, C222), situated on either side of the the said cell (C221), enabling the displacement mechanism (4) to slow down as it approaches a personalisation unit (5) or the selected magazine (1,6,7) along the first displacement axis.

18. Apparatus for personalisation of cards according to one of Claims 15 to 17, characterised in that the displacement mechanism (4) comprises at least two safety switches (SW220, SW221) detecting over-travel along the first axis (X), provided respectively at the initial position and at the final position of the said mechanism on this axis (X).

19. Apparatus for personalisation of cards according to one of Claims 15 to 18, characterised in that the displacement mechanism (4) is equipped with at least two safety switches detecting an end of travel (SW210, SW211) along the second axis (Y), provided respectively at the retracted position and the advanced position of the pincer (3) along this axis (Y).

20. Apparatus for personalisation of cards according to one of Claims 15 to 19, characterised in that there is associated with the displacement mechanism (4) at least one sensor (C210) for detecting the retracted position of the means of gripping (3) along the second axis (Y), while the means of gripping (3) are equipped with another sensor (C211) which, occulted by a shutter placed at the entrance of each personalisation unit (5), indicates the position of advance of the means of gripping (3) in front of the said personalisation units (5).

21. Apparatus for personalisation of cards according to one of Claims 15 to 20; characterised in that there is associated with the displacement mechanism (4) at least one switch (SW212, SW213, SW214), placed at the entrance of each magazine (1,6,7), enabling the pincer (3) to be positioned in front of the corresponding magazine (1,6,7).

22. Apparatus for personalisation of cards according to one of Claims 1 to 21, characterised in that the personalisation units (5) each comprise a guide assembly suitable for enabling the correct introduction of a card into the said unit (5) and for compensating for the positioning discrepancies.

23. Apparatus for personalisation of cards according to one of Claims 1 to 22, characterised in that each personalisation unit (5) comprises a contact (R50, R60, R70, R80, R90), indicating the introduction and correct positioning of a card in the said unit (5) and transmitting a signal to the control unit (U) of the personalisation units (5) initiating the personalisation operation.

24. Apparatus for personalisation of cards according to one of Claims 1 to 23, characterised in that the control unit (U) of the personalisation units transmits a series of signals to the control logic (L) indicating:
    - the state of availability of the personalisation units (5),
    - the state of progress of the personalisation operation taking place in the personalisation units (5) in use,
    - the state of completion of the personalisation operation of the card being treated in the personalisation unit (5),
    - the result of the personalisation operation for the said card.

**Patentansprüche**

1. Vorrichtung zur Personifizierung von Karten, umfassend eine Einrichtung zur Bearbeitung der Karten mit mehreren Personifizierungseinheiten, die mit einer Steuereinheit (U) verbunden sind, welche die Personifizierungsoperationen steuert, und mit einem Manipulationsautomaten, bestehend aus wenigstens
    - einem Zuführmagazin (1) zur Aufnahme der zu personifizierenden Karten,
    - einem Empfängermagazin (6) zur Aufnahme der korrekt personifizierten Karten,
    - einem Ausschußmagazin (7) zur Aufnahme der nicht korrekt personifizierten oder defekten Karten,
- einer Greifeinrichtung (3) für die Karten zum
  - Entnehmen einer Karte aus dem Zuführmagazin (1),
  - Übergeben der Karte in die Ebene einer Personifizierungseinheit (5),
  - Einführen der Karte in diese Einheit (5),
  - Entnehmen der Karte aus dieser Einheit (5),
  - Übergeben der Karte in die Ebene des Empfängermagazins (6) bzw. - bei defekter Karte - des Ausschußmagazins (7),
  - Abgeben der Karte in das Empfängermagazin (6) bzw. - bei defekter Karte - in das Ausschußmagazin (7),

wobei zum Steuern der Personifizierungsoperationen eine Steuerlogik (L) mit der Steuereinheit (U) verbunden ist,

dadurch gekennzeichnet, daß

- jede Personifizierungseinheit (5) vom selben Typ ist,
- der Manipulationsautomat eine Einrichtung (4) zur Verschiebung auf einer Achse (X) in beiden Richtungen aufweist derart, daß er vor einer der Stationen (Magazin oder Personifizierungseinheit) der Vorrichtung zum Halten kommt, wobei die Greifeinrichtung (3) für die Karten so an der Verschiebeeinrichtung (4) gelagert ist, daß sie sich auf einer zweiten Achse (Y) bewegen kann, die rechtwinklig zur ersten Achse (X) verläuft,
- die für eine Personifizierungsoperation erforderliche Zeit länger ist als die Zeit zum Steuern der Personifizierungseinheit mit dem Automaten, wobei die Steuerlogik (L) die Greifeinrichtung (3) sowie die Verschiebeeinrichtung (4) derart steuert, daß sie während einer Personifizierungsoperation innerhalb der Personifizierungseinheit (5) eine oder mehrere Operationen für die Entnahme, die Übergabe oder die Beschickung einer Karte bezüglich einer oder mehrerer verfügbarer Personifizierungseinheiten (5) durchführen,
- wobei auf diese Weise die Personifizierungsoperationen gleichzeitig an mehreren Karten durchgeführt werden und eine andere Einheit berücksichtigt wird, wenn die Personifizierungsoperation in einer Einheit noch nicht beendet ist.

2. Vorrichtung nach Anspruch 1, dadurch gekennzeichnet, daß der Automat weiterhin aufweist
   - eine mit dem Zuführmagazin (1) verbundene Entnahmeeinrichtung (2) für die Karten zum Herausnehmen jeweils einer Karte aus dem Magazin (1),
   - Scrtiereinrichtungen (9,8), die dem Empfängermagazin (6) und dem Ausschußmagazin (7) zugeordnet sind und jede Karte einem dieser Magazine (6,7) zuweist.

3. Vorrichtung nach Anspruch 1 oder 2, dadurch gekennzeichnet, daß die Karten wenigstens einen kodierten Magnetstreifen sowie eine nicht kodierte Mikroschaltung aufweisen, wobei die Personifizierungsoperation in der Kodierung der Mikroschaltung mit Hilfe der auf der Karte enthaltenen Daten und/oder der in der Steuereinheit (U) gespeicherten Informationen besteht.

4. Vorrichtung nach Anspruch 3, dadurch gekennzeichnet, daß die Personifizierungseinheiten (5) gemischte Lese-Kodiergeräte für die Karten mit Magnetstreifen und mit Mikroschaltung sind und einen Plattenverbinder mit Speicher aufweisen.

5. Vorrichtung nach einem der Ansprüche 1 bis 4, dadurch gekennzeichnet, daß das Zuführmagazin (1) und das Empfängermagazin (6) austauschbar und herausnehmbare Kassetten sind.

6. Vorrichtung nach einem der Ansprüche 1 bis 5, dadurch gekennzeichnet, daß dem Zuführmagazin (1) wenigstens ein Sensor (C10) zugeordnet ist, der feststellt, ob das Magazin leer ist;

7. Vorrichtung nach einem der Ansprüche 1 bis 6, dadurch gekennzeichnet, daß dem Ausschußmagazin (7) wenigstens ein Zustandsschalter (SW30) zugeordnet ist, der feststellt, wenn das Magazin voll ist.

8. Vorrichtung nach einem der Ansprüche 2 bis 7, dadurch gekennzeichnet, daß die Entnahmeeinrichtung (2) bzw. die Sortiereinrichtungen (8, 9) für die Karten wenigstens einen vorzugsweise mit Getriebe ausgerüsteten Motor (M10, M40, M30) sowie einen elastischen Riemen aufweisen, der vorzugsweise mit Silikon beschichtet ist.

9. Vorrichtung nach einem der Ansprüche 2 bis 8, dadurch gekennzeichnet, daß die Entnahmeeinrichtung (2) wenigstens einen Sensor (C11) aufweist, der feststellt, wenn eine Karte das Zuführmagazin (1) verlassen hat, wobei der Motor (M10) die Entnahmeeinrichtung (2) so lange antreibt, bis der Sensor (C11) die Karte erfaßt hat.

10. Vorrichtung nach Anspruch 9, dadurch gekennzeichnet, daß der Sensor (C11) der Steuerlogik (L) ein Entnahmefehlersignal sendet, wenn die zu entnehmende Karte von dem Sensor (C11) nach Ablauf einer für die Entnahmeoperation normalerweise vorgesehenen Zeit nicht erfaßt worden ist, wobei dieses Signal durch die Steuerlogik (L) auch als ein Signal für ein leeres Zuführmagazin interpretiert werden kann, wenn die Steuerlogik gleichzeitig ein Signal von dem dem Zuführmagazin (1) zugeordneten Sensor (C10) empfängt.

11. Vorrichtung nach einem der Ansprüche 2 bis 10, dadurch gekennzeichnet, daß jede Sortiereinrichtung (8,9) wenigstens einen Sensor (C30 bzw. C40) aufweist, der feststellt, wenn sich vor dem Eingang des Ausschußmagazins (7) bzw. des Empfängermagazins (6) eine Karte befindet, wobei der Motor (M30 bzw. M40) die zugeordnete Sortiereinrichtung (8 bzw. 9) so lange antreibt, bis die Karte von dem Sensor (C30 bzw. C40) erfaßt worden ist.

12. Vorrichtung nach einem der Ansprüche 1 bis 11, dadurch gekennzeichnet, daß die Greifeinrichtung für die Karten eine Zange (3) aufweist, die vorzugsweise von einem Getriebemotor (M20) mit Exzenter betätigt wird.

13. Vorrichtung nach Anspruch 12, dadurch gekennzeichnet, daß der Zange (3) wenigstens zwei Zustandsschalter (SW200, SW201) zugeordnet sind, die die Öffnungsstellung bzw. die Schließstellung der Zange (3) steuern.

14. Vorrichtung nach Anspruch 12 oder 13, dadurch gekennzeichnet, daß die Zange (3) zwei Freiheitsgrade zum Ausgleich von Positionierungsfehlern vor den Leseeinheiten (5) haben, wobei diese Freiheitsgrade durch die Wirkung einer Feder (3.3) und flexibler Scheiben bewirkt werden, die in dem Mechanismus der Zange (3) enthalten sind.

15. Vorrichtung nach einem der Ansprüche 1 bis 14, gekennzeichnet durch
    - einen Motor (M22), vorzugsweise Gleichstrommotor, zur Verschiebung der Greifeinrichtung (3) entlang der ersten Achse (X) entsprechend den Haltestellungen der Greifeinrichtung (3) vor einem Magazin (1,6,7) oder einer Personifizierungseinheit (5),
    - einen Motor (M21), vorzugsweise Getriebemotor, zur Verschiebung der Greifeinrichtung (3) entlang der zweiten Achse (Y) für die Übergabe einer Karte von der Greifeinrichtung (3) in eine Personifizierungseinheit (5) oder ein Magazin (1,6,7).

16. Vorrichtung nach Anspruch 15, dadurch gekennzeichnet, daß die Verschiebeeinrichtung (4) wenigstens eine Zelle (C221) für die Lokalisierung der Personifizierungseinheit (5) oder des angewählten Magazins (1,6,7) auf der ersten Verschiebeachse (X) aufweist.

17. Vorrichtung nach Anspruch 16, dadurch gekennzeichnet, daß zu beiden Seiten der Zelle (C221) je eine weitere Zelle (C220, C222) angeordnet ist, die bei einer Annäherung der auf der ersten Achse (X) bewegten Verschiebeeinrichtung (4) an die Personifizierungseinheit (5) bzw. an das angewählte Magazin (1,6,7) eine Verzögerung der Verschiebeeinrichtung bewirkt.

18. Vorrichtung nach einem der Ansprüche 15 bis 17, dadurch gekennzeichnet, daß die Verschiebeeinrichtung (4) wenigstens zwei Sicherheitsschalter (SW220, SW 221) zum Erfassen einer Wegüberschreitung entlang der ersten Achse (X) aufweist, die an der Anfangsstellung bzw. an der Endstellung der Verschiebeeinrichtung (4) auf dieser Achse (X) angeordnet sind.

19. Vorrichtung nach einem der Ansprüche 15 bis 18, dadurch gekennzeichnet, daß die Verschiebeeinrichtung (4) wenigstens zwei Sicherheitsschalter (SW210, SW 211) zum Erfassen des Wegendes entlang der zweiten Achse (Y) aufweist, die an der zurückgezogenen bzw. der vorgeschobenen Position der Zange (3) auf der Achse (Y) vorgesehen sind.

20. Vorrichtung nach einem der Ansprüche 15 bis 19, dadurch gekennzeichnet, daß der Verschiebeeinrichtung (4) wenigstens ein Sensor (C210) zum Erfassen der zurückgezogenen Stellung der Greifeinrichtung (3) auf der zweiten Achse (Y) zugeordnet ist, während die Greifeinrichtung (3) einen weiteren Sensor (C211) aufweist, der durch ein Markierungselement verdunkelt wird, das am Eingang jeder Personifizierungseinheit (5) vorgesehen ist und dadurch die Vorschubstellung der Greifeinrichtung (3) vor die Personifizierungseinheiten (5) anzeigt.

21. Vorrichtung nach einem der Ansprüche 15 bis 20, dadurch gekennzeichnet, daß der Verschiebeeinrichtung (4) wenigstens ein Schalter (SW 212, SW 213, SW 214) zugeordnet ist, der am Eingang jedes Magazins (1,6,7) angeordnet ist und die Positionierung der Zange (3) vor dem entsprechenden Magazin (1,6,7) erlaubt.

22. Vorrichtung nach einem der Ansprüche 1 bis 21, dadurch gekennzeichnet, daß jede Personifizierungseinheit (5) eine Führung zur korrekten Einführung einer Karte in die Einheit (5) und zum Ausgleich von Positionierungsfehlern aufweist.

23. Vorrichtung nach einem der Ansprüche 1 bis 22, dadurch gekennzeichnet, daß jede Personifizierungseinheit (5) einen Kontakt (R50,R60,R70,R80,R90) aufweist, der die eingeschobene und korrekt positionierte Stellung einer Karte in der Einheit (5) anzeigt und der Steuereinheit (U) für die Personifizierungseinheiten (5) ein Signal für den Beginn der Personifizierungsoperationen sendet.

24. Vorrichtung nach einem der Ansprüche 1 bis 23, dadurch gekennzeichnet, daß die Steuereinheit (U) für die Personifizierungseinheiten (5) der Steuerlogik (L) eine Reihe von Signalen übermittelt, welche anzeigen:
   - Bereitschaftszustand der Personifizierungseinheiten (5),
   - Beendigungszustand der Personifizierungsoperation innerhalb der in Betrieb befindlichen Personifizierungseinheiten (5),
   - Endzustand der Personifizierungsoperation einer Karte innerhalb der Personifizierungseinheit (5),
   - Operationsergebnis der Personifizierung für diese Karte.

FIG.1

EP 0 256 921 B1

FIG. 2

EP 0 256 921 B1

EP 0 256 921 B1

CONTACTS
BONNE POSITION

| R | | | | | —R

COMMANDE
lecteurs-encodeurs —U

| 1— | MAGASIN ENTREE |
| 6— | MAGASIN SORTIE |
| 7— | MAGASIN REBUT |

| Lecteur-encodeur | | | | |
| 5.1 | 5.2 | 5.3 | 5.4 | 5.5 |

CAPTEURS/INT.

—RS232C L

| 2— | SEPARATEUR ENTREE |
| 9— | SEPARATEUR SORTIE |
| 8— | SEPARATEUR REBUT |

LOGIQUE
DE COMMANDE

ouverte/
fermée → PINCE —3

X
Y

DISPOSITIF
DE
DEPLACEMENT —4

AFFICHAGE
LUMINEUX/SONORE —10

## FIG. 3

FIG. 4

FIG. 5a

FIG. 5b

EP 0 256 921 B1

M10

C 10

2

C 11

SW 212

3

M20

C 220

C 221

SW 210

C 222

# FIG. 6

FIG. 7

26

FIG. 8

FIG. 9

SWITCHES

REMPLACEMENT CASSETTES — Sw 60

OUVERT/FERME — Sw 200, Sw 201

SURCOURSE X — Sw 211, Sw 210

SURCOURSE Y — Sw 220, Sw 221

PLEIN — Sw 30

MAGASINS — Sw 213, Sw 214, Sw 212

LECTEURS — 1 5.1, 2 5.2, 3 5.3, 4 5.4, 5 5.5

MIR

COMMANDE LECTEURS

BONNE POSITION — R 50, R 60, R 70, R 80, R 90

LOGIQUE DE COMMANDE

SIGNAL LUMINEUX/SONORE

CAPTEURS

MAGASINS — C40, C30, C10, C11

REPERE POSITION — C222, C220, C221

AVANCEE LECTEURS — C211

REPOS — C210

MOTEURS

PINCE — M 20

DISPOSITIF DEPLACEMENT — M 22, M 21

DEPILEURS-EMPILEURS — M 10, M 30, M 40

28

PERSOCAM

| SOUS-ENSEMBLES | ACTION-NEURS | CAPTEURS | FONCTIONS |
|---|---|---|---|
| Poste 1<br>Cassette départ | M 10 | C 10<br>C 11 | Cassette vide<br>Pince fermée |
| Poste 2<br>Commande pince<br>Carte. (axe Y) | M 20 | SW 201<br>SW 200 | Pince ouverte<br>Pince fermée |
| Transport de la<br>carte. (axe Y) | M 21 | SW 210 | Sécurité déplacement<br>Pince en retrait |
| | | SW 211 | Sécurité déplacement pince en position avancée |
| | | C 210 | Pince en position retrait |
| | | C 211 | Pince en position travail |
| | | SW 212 | Sécurité en position de prise de cartes |
| | | SW 213 | Sécurité en position de décharge cartes défectueuses |
| | | SW 214 | Sécurité en position de décharge cartes bonnes |
| Transport de la<br>carte. (axe X) | M 22 | SW 220 | Sécurité de repos (en face de la cassette départ) |
| | | SW 221 | Sécurité fin de déplacement (en face cassettes cartes valables) |
| | | | Cellules position arrêt sur poste de travail : |
| | | C 220 | Cote repos : ralentir moteur |
| | | C 221 | Centrale : arrêt moteur |
| | | C 222 | Cote travail : ralentir moteur |

# FIG. 10

| | | | |
|---|---|---|---|
| Poste 3<br>Réceptacle carte<br>défectueuse | M 30 | C 30<br>SW 30 | Présence carte à l'entrée<br>Réceptacle plein |
| Poste 4<br>Introduction<br>cartes valides<br>dans cassette | M 40<br><br>Arrêt | C 40<br><br>SW 60 | Présence carte à l'entrée<br><br>Cassette en cours de remplacement |
| Poste 5<br>Lecteur N°1 | | MCR 50<br>R 50 | Résultat lecteur<br>Carte présente dans lecteur |
| Poste 6<br>Lecteur N°2 | | MCR 60<br>R 60 | Résultat lecteur<br>Carte présente dans lecteur |
| Poste 7<br>Lecteur N°3 | | MCR 70<br>R 70 | Résultat lecteur<br>Carte présente dans lecteur |
| Poste 8<br>Lecteur N°4 | | MCR 80<br>R 80 | Résultat lecteur<br>Carte présente dans lecteur |
| Poste 9<br>Lecteur N°5 | | MCR 90<br>R 90 | Résultat lecteur<br>Carte présente dans lecteur |

## SUITE FIG. 10

```
┌──────────────────┐      ┌──────────────────┐                    ╭───╮
│  ALARME POUR     │      │  ALARME DEFAUT   │                    │ D │
│   OPERATEUR      │      │    DEPILEUR      │                    ╰─┬─╯
└────────┬─────────┘      └─────────┬────────┘                      │
         │OUI      C10              │                    ┌──────────┴──────────┐
      ◇──┴────────────◇             │                    │   AVANCE  D'UNE     │
     ◇    BAC A        ◇─── NON ────┘                    │  CARTE  PAR  LE     │
      ◇ CARTES VIDE   ◇                                  │     DEPILEUR        │
        ◇───────◇                                        └──────────┬──────────┘
             │                                                      │
             │                    C11           ◇───────────────────┴──◇
             └──────── NON ──────────────◇  CARTE PRESENTE              ◇
                                          ◇  SOUS DEPILEUR             ◇
                                            ◇──────────┬──────────────◇
                                                       │OUI
    t 1                          ┌──────────────────────┴───────┐
   ≃ 2,5 sec.                    │  PRISE D'UNE CARTE           │
                                 │  PAR LA PINCE                │
                                 └───────────────┬──────────────┘
                      ┌─────────────┐  ┌──────────┴─────────────────────┐
                      │             └─▶│ INTRODUCTION  DANS  UN          │
    t 2               │                │ LECTEUR ET TRAITEMENT           │
   ≃ 1,5 sec.         │                └──────────┬─────────────────────┘
                      │            ◇──────────────┴──────────◇
                      └─── NON ───◇    IDENTIFICATION         ◇
                                   ◇     TERMINEE             ◇
                                     ◇──────────┬───────────◇
                      ┌─────────────┐           │OUI
                      │           └─▶┌──────────┴──────────┐
    t 3               │              │ PERSONNALISATION    │
   ≃ 30 sec.          │              │   EN  COURS         │
                      │              └──────────┬──────────┘
                      │          ◇──────────────┴──────────◇
                      └── NON ──◇    PERSONNALISA.          ◇
                                 ◇     TERMINEE            ◇
                                   ◇──────────┬──────────◇
                                              │OUI
                                 ┌────────────┴─────────┐
                                 │ PRISE DE LA CARTE    │
                                 │  PAR L'AUTOMATE      │
                                 └────────────┬─────────┘
    t 4               ◇──────────────────────┴──────────────◇
   ≃ 3 sec.      NON ◇          CARTE VALIDE                 ◇ OUI
                      ◇────────────────┬────────────────────◇
               ┌──────┴───────────┐          ┌──────────────┴──────┐
               │ DEPOT  DANS LE   │          │ RANGEMENT DANS      │
               │ BAC DE REJET     │          │ LE MAGASIN DES      │
               └──────────────────┘          │ CARTES VALIDES      │
                                             └─────────────────────┘
```

# FIG. 11

31

i = 1

PINCE DEVANT MAGASIN D'ALIMENTATION

PINCE DEVANT LECTEUR i (CHARGEMENT)

PINCE DEVANT MAGASIN D'ALIMENTATION

i = i + 1

0     i ≤ 5     N

i = i MODULE 5

PAUSE

N     IDENTIFICATION TERMINEE EN LECTEUR i

0

PINCE DEVANT LECTEUR i (DECHARGEMENT)

0     CARTE VALABLE     N

PINCE DEVANT MAGASIN DE RECEPTION DES CARTES VALIDES

PINCE DEVANT MAGASIN DE REBUT

PINCE DEVANT MAGASIN D'ALIMENTATION

PINCE DEVANT LECTEUR i (CHARGEMENT)

i = i + 1

FIG. 12

32